(19) Europäisches Patentamt / European Patent Office / Office européen des brevets

(11) **EP 3 476 061 B1**

(12) **FASCICULE DE BREVET EUROPEEN**

(45) Date de publication et mention de la délivrance du brevet:
**18.11.2020 Bulletin 2020/47**

(21) Numéro de dépôt: **17737341.2**

(22) Date de dépôt: **22.06.2017**

(51) Int Cl.:
**H04B 7/155** (2006.01)     **H04L 1/00** (2006.01)

(86) Numéro de dépôt international:
**PCT/FR2017/051659**

(87) Numéro de publication internationale:
**WO 2017/220937 (28.12.2017 Gazette 2017/52)**

(54) **PROCÉDÉ DE TRANSMISSION D'UN SIGNAL NUMÉRIQUE POUR UN SYSTÈME À AU MOINS UN RELAIS HALF-DUPLEX DYNAMIQUE À LOGIQUE SÉLECTIVE, PRODUIT PROGRAMME ET DISPOSITIF RELAIS CORRESPONDANTS**

VERFAHREN ZUR ÜBERTRAGUNG EINES DIGITALEN SIGNALS FÜR EIN SYSTEM MIT MINDESTENS EINEM DYNAMISCHEN HALBDUPLEXRELAIS MIT SELEKTIVER LOGIK, ENTSPRECHENDES PROGRAMMPRODUKT UND RELAISVORRICHTUNG

METHOD FOR TRANSMITTING A DIGITAL SIGNAL FOR A SYSTEM HAVING AT LEAST ONE DYNAMIC HALF-DUPLEX RELAY WITH SELECTIVE LOGIC, CORRESPONDING PROGRAM PRODUCT AND RELAY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2016 FR 1655886**

(43) Date de publication de la demande:
**01.05.2019 Bulletin 2019/18**

(73) Titulaire: **ORANGE**
**75015 Paris (FR)**

(72) Inventeurs:
• **VISOZ, Raphaël**
**92170 Vanves (FR)**
• **MOHAMAD, Abdulaziz**
**92260 Fontenay aux Roses (FR)**

• **BERTHET, Antoine**
**92290 Chantenay Malabry (FR)**

(56) Documents cités:
• **JIANBO CAO ET AL: "A novel ARQ protocol for OFDMA relay system based on network coding", COMMUNICATION TECHNOLOGY (ICCT), 2010 12TH IEEE INTERNATIONAL CONFERENCE ON, IEEE, PISCATAWAY, NJ, USA, 11 novembre 2010 (2010-11-11), pages 1047-1051, XP031849652, DOI: 10.1109/ICCT.2010.5688564 ISBN: 978-1-4244-6868-3**
• **MOHAMAD ABDULAZIZ ET AL: "Dynamic Selective Decode and Forward in wireless relay networks", 2015 7TH INTERNATIONAL CONGRESS ON ULTRA MODERN TELECOMMUNICATIONS AND CONTROL SYSTEMS AND WORKSHOPS (ICUMT), IEEE, 6 octobre 2015 (2015-10-06), pages 189-195, XP032849435, DOI: 10.1109/ICUMT.2015.7382426**

## Description

### Domaine de l'invention

Le domaine de l'invention est celui de la transmission de données codées dans un système de télécommunication qui comprend au moins deux sources, un relais et une destination. Plus précisément, l'invention se rapporte au codage de réseau et elle concerne l'amélioration de la qualité de la transmission des données, et en particulier l'amélioration des performances du décodage correcteur d'erreurs dans un récepteur.

L'invention s'applique notamment, mais non exclusivement, à la transmission de données via des réseaux mobiles, par exemple pour des applications temps réel.

### Art antérieur

Les réseaux, en particulier mobiles, sont à la recherche de gains significatifs en termes de capacité, de fiabilité, de consommation et autres. Le canal de transmission d'un réseau mobile est réputé difficile et conduit à une fiabilité de transmission relativement médiocre. Des progrès importants ont été réalisés ces dernières années, en matière de codage et de modulation, notamment pour des considérations de consommation et de capacité. En effet, dans un réseau mobile où plusieurs émetteurs/récepteurs partagent les mêmes ressources (temps, fréquence et espace) il faut réduire au maximum la puissance d'émission.

Cette réduction va à l'encontre de la couverture et donc de la capacité du système et plus généralement de ses performances.

Pour augmenter la couverture, fiabiliser les communications et plus généralement améliorer les performances, une approche consiste à s'appuyer sur des relais pour augmenter l'efficacité spectrale et donc améliorer l'efficacité de transmission et la fiabilité des systèmes.

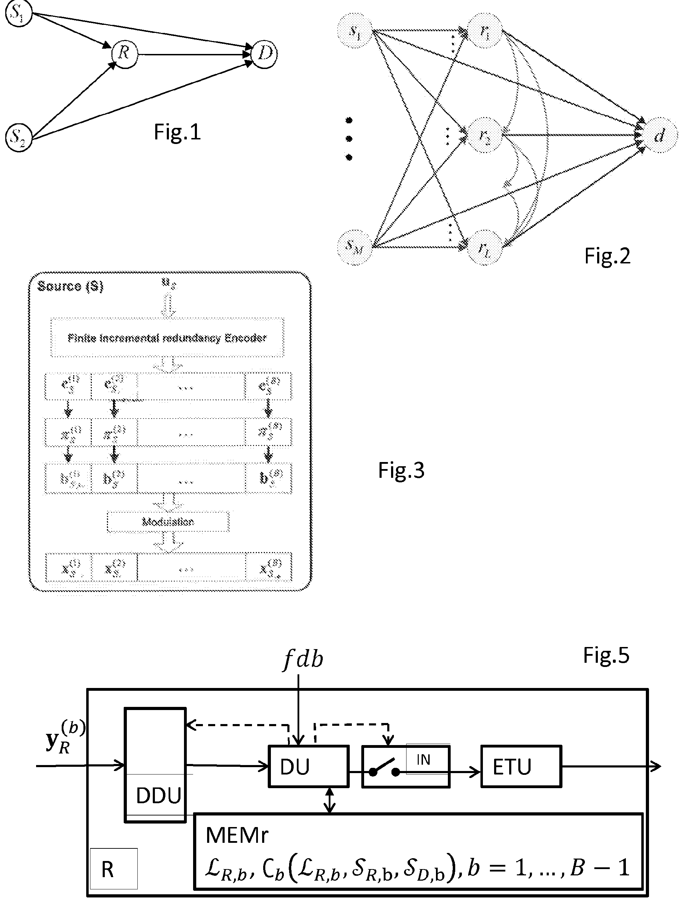

Un système MARC est un système de télécommunication à au moins quatre nœuds comprenant au moins deux sources (émetteurs), un relais et une destination (récepteur). La topologie des systèmes MARC illustrée par la figure 1 est telle que les sources, nœuds $S_1$ et $S_2$, diffusent leurs séquences d'informations codées à l'attention du relais R et de la destination D. Le relais décode les signaux reçus issus des sources $S_1$ et $S_2$ et ré-encode conjointement ceux-ci en ajoutant une redondance propre créant un code de réseau spatialement distribué. A la destination D, le décodage des trois séquences codées spatialement distribuées, comprenant les deux séquences codées reçues issues directement des sources S1 et S2 et la séquence codée issue du relais, repose sur des algorithmes de décodage conjoint canal/ réseau.

Le codage de réseau est une forme de coopération selon laquelle les nœuds du réseau partagent non seulement leurs ressources propres (puissance, bande, etc.) mais également leur capacité de calcul, pour créer un codage distribué de plus en plus puissant au fur et à mesure que l'information se propage à travers les nœuds. Il amène des gains substantiels en termes de diversité et de codage et donc de fiabilité de transmission.

Pour un système MARC, on considère que le débit bits/s des sources et du relais est D=1/Ts et que la durée de transmission totale disponible est fixée à T. Ainsi, le nombre d'utilisations du canal (channel uses) disponibles pouvant être partagées entre les sources et le relais est N=DT. Si on considère le cas du débit de Nyquist et d'une transmission d'un pulse dont la forme est celle d'un sinus cardinal alors N est le nombre total de dimensions complexes disponibles et D est la bande totale disponible du système.

On distingue deux types de fonctionnement pour le relais : le mode half-duplex et le mode full-duplex.

Selon le mode half-duplex connu, on distingue deux phases de transmission qui correspondent à des utilisations du canal de transmission différentes car le relais est incapable de recevoir et d'émettre simultanément. Les sources et le relais partagent donc le nombre total d'utilisations du canal de transmission en deux parties successives correspondants aux deux phases. Pendant la première phase qui comprend la 1ère partie des utilisations du canal de transmission (time slots), les deux sources émettent mais pas le relais. Le relais décode/ré-encode conjointement pour déduire le signal à émettre lors des prochaines utilisations du canal de transmission. Pendant la deuxième phase qui comprend la 2e partie des utilisations du canal de transmission, le relais émet le signal déterminé pendant la 1ère partie des utilisations du canal de transmission et les sources émettent des séquences de parité relatives aux mêmes informations que celles émises pendant la 1ère partie des utilisations du canal de transmission. Le relais respecte donc un certain cadencement fixé par la durée de la deuxième phase. Les relais de type half-duplex sont attractifs du fait d'un schéma de communication simple et du fait de la facilité de les mettre en œuvre et de leur coût réduit qui en découlent.

La demande de brevet WO2012/022905 A1 au nom du même demandeur décrit un relais half duplex qui fonctionne selon le cadencement précédent en deux phases pour un système MARC avec liens non orthogonaux. Le relais met en œuvre un procédé de relayage qui ne transmet pas les mots décodés avec erreur selon une technique dite SDF Selective Decode and Forward. Selon cette technique, le relais tente de décoder les messages des sources et transmet le résultat d'une fonction déterministe des seuls messages détectés sans erreur. Cette détection d'erreur est effectuée au moyen d'un contrôle du CRC (Cyclic Redundancy Check) qui est inclus dans les messages sources. Par ailleurs, chaque relais inclus dans sa transmission un signal de contrôle indiquant à la destination et aux autres relais, les messages des sources avec lesquels il coopère.

Bien que la technique de relayage sélective présente des avantages indéniables en évitant la propagation d'erreur par le relais, son utilisation avec un relais half duplex a pour inconvénient de nécessiter que le relais et les sources déterminent et connaissent les durées respectives des deux phases de transmission.

La demande de brevet WO 2015092302 A1 décrit une technique de relayage selon laquelle le relais half duplex a un fonctionnement dynamique et non fixe, il est capable d'adapter son fonctionnement en fonction des erreurs de décodage des messages reçus provenant de plusieurs sources.

En dessous d'un seuil B1 de nombre d'utilisations du canal de transmission, le relais reste dans un mode d'écoute non sélective. Dans ce mode, le relais tente de détecter et de décoder sans erreur les messages de toutes les sources. Dès que le nombre d'utilisations du canal écoulées passe le seuil B1, le relais passe dans un mode d'écoute sélective. Dans ce dernier mode, le relais bascule d'une phase d'écoute pendant laquelle il tente de détecter et de décoder sans erreur les messages des sources à une phase de codage et de transmission vers la destination dès qu'un message est décodé sans erreur. Ainsi, le relais passe d'une écoute non sélective à une écoute sélective si le temps écoulé dépasse le seuil B1 qui est un paramètre du système. Le seuil B1 permet ainsi de ne pas pénaliser des sources qui nécessitent un temps de décodage plus long qu'une source dont le lien source-relais est nettement meilleur que les liens source-relais des autres sources. Le paramétrage du seuil B1 permet ainsi d'introduire une flexibilité de fonctionnement du système MARC qui permet une adaptation du relais à des environnements différents entre les sources. B1 peut être variable, par exemple à chaque mot de code de B blocs ou en fonction d'un nombre de mots de code ; le temps d'écoute du relais n'est pas fixe. D'une part cette flexibilité permet une adaptation à une variation instantanée de qualité des liens sources-relais. D'autre part, dans l'éventualité où le lien entre une des sources et le relais est très mauvais, l'allongement du temps d'écoute non sélective peut permettre finalement au relais de décoder cette source et de transmettre vers la destination un signal représentatif des messages de toutes les sources. En outre, même si le décodage de cette source ne peut se faire sans erreur, le relais peut quand même aider la destination en transmettant un signal représentatif des messages des autres sources décodés sans erreur après passage dans le mode d'écoute sélective. Par ailleurs, ce fonctionnement est totalement transparent pour les sources ; seul le relais adapte son mode d'écoute.

Ainsi, la technique décrite repose en particulier sur la distinction de deux modes d'écoute du relais, un mode d'écoute totale et un mode d'écoute sélective. Pendant le mode d'écoute totale le relais attend de décoder sans erreur les messages de toutes les sources à partir, pour une source, de tout ou partie des mots de code reçus émis par cette source avant de transmettre après codage les seuls messages décodés sans erreur. Après le passage du mode d'écoute totale au mode d'écoute sélective, le relais transmet après codage, les premiers messages qu'il a pu décoder sans erreur.

Le basculement d'une phase d'écoute à une phase de codage et de transmission intervient donc de manière dynamique et non plus fixe. Cette souplesse dans le basculement permet d'adapter le fonctionnement du relais à la qualité du canal entre les sources et le relais ce qui n'est pas le cas si la durée d'écoute du relais est fixe par rapport à la durée de transmission des sources. La distinction entre deux modes d'écoute augmente la probabilité de pouvoir décoder sans erreur plusieurs sources même quand un des liens sources relais est de qualité bien meilleure que les autres liens.

Toutefois, dès que le relais bascule de la phase de réception à la phase de codage et de transmission, il ne peut plus décoder correctement les messages des sources non encore décodés puisque le relais étant half-duplex, il ne peut simultanément écouter les sources et transmettre. La valeur du seuil est donc sensible et difficile à déterminer.

En outre, un lien source destination peut parfois se révéler être de meilleure qualité que le lien source relais et permettre à la destination de décoder correctement le message de cette source avant le relais. Lors d'une réception non sélective, il se peut que le relais ne bascule pas en phase de codage uniquement parce qu'il n'arrive pas à décoder correctement un message déjà correctement décodé par la destination. Dans ce cas, le relais dépense de l'énergie inutilement et n'apporte pas d'aide à la destination sur le temps restant avant le passage du seuil B1 alors qu'il aurait pu coopérer avec la destination avant ce seuil B1. Lors d'une réception sélective, le basculement du relais suite au décodage correct d'un message qui s'avère avoir été déjà correctement décodé par la destination non seulement n'apporte pas de gain à la destination mais en outre augmente l'interférence à la destination.

Le document intitulé: "A novel ARQ protocol for OFDMA relay system based on network coding" de Jianbo Cao, publié lors de lors de la 12ème conférence internationale sur les technologies de communication, IEEE ICCT, 11 Novembre 2011, pages 1047-1051, divulgue un système avec un relais half duplex et de multiples sources transmettant pendant chaque intervalle de temps un mot de code. Pendant chaque intervalle de temps, le relais génère une liste de sources depuis lesquelles il a reçu avec succès un mot de code sans erreur, ainsi qu'une liste de sources depuis lesquelles la destination a reçu avec succès un mot de code sans erreurs grâce à des informations de voies de retour transmises par la destination. Le relais transmet ensuite une combinaison linéaire d'un mot de code décodé avec succès (par le relais) de l'intervalle de temps courant et d'un mot de code décodé avec succès (par le relais) et non décodé (par la destination) de l'intervalle de temps précédent et sélectionné de manière aléatoire.

**Caractéristiques principales de l'invention**

L'invention a pour objet un procédé de relayage mis en œuvre par un relais half-duplex destiné à un système de télécommunication comprenant plusieurs sources, au moins le relais et une destination comprenant :

- un paramétrage d'ensembles $\mathcal{L}_{R,b}$ de sources indexés par le temps $b$,
- une définition de règles logiques

$$C_b\big(\mathcal{L}_{R,b}, \mathcal{S}_{R,b}, \mathcal{S}_{D,b}\big), b = 1, \dots, B-1$$

indexées par le temps $b$ qui conduisent à la détermination d'une sélection de messages de sources décodées sans erreur avec lesquelles le relais coopère au temps $b$ + 1 en prenant uniquement en compte l'ensemble $\mathcal{L}_{R,b}$ un ensemble $\mathcal{S}_{R,b}$ de sources décodées sans erreur par le relais et un ensemble $\mathcal{S}_{D,b}$ de sources décodées sans erreur par la destination, $B$ un naturel, $B > 2$,

- une phase de réception comprenant :

  ◦ la réception de mots de code émis par les sources correspondant pour une source à B blocs dont le premier bloc peut être décodé de manière indépendante des autres blocs, cette phase comprenant une étape de décodage pour estimer par source à partir de mots de code reçus un message $\mathbf{u}_S$ associé aux mots de code émis par la source,
  ◦ la détection d'erreur et la décision par le relais des messages décodés sans erreur, les messages décodés sans erreur déterminant l'ensemble $\mathcal{S}_{R,b}$ des sources décodées sans erreur par le relais,

- une phase de codage et de transmission vers la destination d'un signal représentatif uniquement de la sélection des messages.

La phase de réception est telle que, après chaque réception d'un bloc des différentes sources, le relais réceptionne et décode une voie de retour provenant de la destination indiquant si aucun ou au moins un message est décodé sans erreur, ces messages décodés sans erreur par la destination déterminant l'ensemble $\mathcal{S}_{D,b}$ de sources décodées sans erreur par la destination. Et le procédé est tel que le relais bascule de la phase de réception à la phase de codage et de transmission uniquement dès qu'une des règles logiques $C_b$ est valide.

L'invention a en outre pour objet un relais half duplex destiné à un système de télécommunication comprenant plusieurs sources, au moins le relais et une destination pour la mise en œuvre d'un procédé de relayage selon l'invention. Le relais comprend :

- une mémoire pour mémoriser un paramétrage d'ensembles $\mathcal{L}_{R,b}$ de sources indexés par le temps $b$ et pour mémoriser des règles logiques

$$C_b\big(\mathcal{L}_{R,b}, \mathcal{S}_{R,b}, \mathcal{S}_{D,b}\big), b = 1, \dots, B-1$$

indexées par le temps $b$ qui conduisent à la détermination d'une sélection de messages de sources décodées sans erreur avec lesquelles le relais coopère au temps $b$ + 1 en prenant uniquement en compte l'ensemble $\mathcal{L}_{R,b}$ , un ensemble $\mathcal{S}_{R,b}$ de sources décodées sans erreur par le relais et un ensemble $\mathcal{S}_{D,b}$ de sources décodées sans erreur par la destination, $B$ un naturel, $B > 2$,

- un moyen de décodage pour estimer par source, à partir de mots reçus correspondant à des mots de code émis par les sources, les mots de code successifs émis par une source correspondant à B blocs dont le premier bloc peut être décodé de manière indépendante des autres blocs, un message $\mathbf{u}_S$ associé aux mots de code émis par la source,

- un module de décision pour décider des messages source $\mathbf{u}_S$ décodés sans erreur à partir des messages estimés, à chaque estimation d'un message suite à un bloc reçu, et déterminer l'ensemble $\mathcal{S}_{R,b}$ des sources décodées sans erreur par le relais,

- un codeur réseau de la sélection de messages,
- un émetteur d'un signal représentatif des messages codés réseau vers la destination et d'un signal de contrôle indiquant les messages sélectionnés,

Le relais est tel que le moyen de décision aiguille la sélection des messages décodés sans erreur en entrée du codeur réseau dès qu'une des règles logiques $C_b$ est valide, l'ensemble $\mathcal{S}_{D,b}$ des sources décodées sans erreur par la destination étant déterminé en prenant en compte une voie de retour provenant de la destination indiquant un décodage correct ou pas d'un ou plusieurs messages des sources, ces messages décodés sans erreur par la destination déterminant l'ensemble $\mathcal{S}_{D,b}$ de sources décodées sans erreur par la destination.

Ainsi, le relais fait partie d'un système de télécommunication qui comprend au moins deux sources, le relais et la destination. Le système peut comprendre plus de deux sources et plusieurs relais.

Les sources émettent $T$ messages dans des intervalles de transmission consécutifs mais qui peuvent être de durée variable. Chaque intervalle de transmission est indépendant, les relais réinitialisent leurs mémoires à la fin de chaque intervalle de transmission.

Le procédé de relayage est tel que le codage aux sources est de type à redondance incrémentale finie et délivre à chaque sous intervalle de transmission $b = 1,2, ...,B$ d'un intervalle courant de transmission un bloc $\mathbf{c}_S^{(b)}$ tel que les $B$ blocs successifs $\{\mathbf{c}_S^{(b)} : 1 \leq b \leq B\}$ forment le mot de code $\mathbf{c}_s$, tel que le premier bloc peut être décodé de manière indépendante des autres blocs et tel que les blocs suivants sont des bits de parité qui ajoutent une redondance au premier bloc.

Le relais estime les messages reçus provenant des sources et codent uniquement une sélection de messages détectés sans erreur sous la forme d'un signal représentatif.

Le relais étant half-duplex, il ne peut simultanément transmettre et écouter une voie de retour provenant de la destination.

Si la destination décode correctement le message d'une source, elle remonte via une voie de retour une indication que le message de la source $S_i$ est correctement décodé ou pas. Pour assurer la causalité du procédé, la voie de retour est multiplexée en temps avec les transmissions des sources.

A partir du retour de la destination, le relais peut déduire un ensemble de messages correctement décodés par la destination au temps $b$.

Au temps $b$, le relais applique la règle logique $C_b$ aux arguments constitués par l'ensemble des messages qu'il a décodés sans erreur, l'ensemble des messages correctement décodés sans erreur par la destination et l'ensemble $L_{R,b}$ paramétré pour obtenir un ensemble. Si l'ensemble obtenu n'est pas vide le relais bascule de la réception au codage réseau d'une sélection de messages décodés sans erreur. Et le relais transmet un signal représentatif issu du codage réseau. A noter que les règles logiques après basculement sont ignorées.

Ainsi, le basculement du relais de la phase de réception à la phase de codage et de transmission intervient uniquement si la règle logique est respectée.

Le relais écarte tout message de la source i décodé sans erreur par la destination (et s'il la lui-même correctement décodé) de sa sélection des messages décodés sans erreur à coder réseau.

Ainsi, un relais n'émet d'information que sur les messages qui ne sont pas encore décodés correctement par la destination optimisant ainsi l'utilisation du canal de transmission. Le relais collabore uniquement avec les messages restant à décoder par la destination ce qui simplifie le traitement à la réception par la destination et ce qui permet de réduire la puissance consommée nécessaire au codage réseau et au décodage réseau ainsi que les interférences générées au sein du système et donc la puissance nécessaire pour lutter contre ces interférences.

La prise en compte dans la sélection par le relais des décisions intervenues à la destination permet d'assurer que la coopération après le basculement soit toujours efficace et apporte une aide à la destination.

Selon un mode de réalisation, les règles logiques $C_b$, $b = 1, ... , B - 1$, définissent des sources avec lesquelles le relais peut coopérer dans un mode de réception non sélective et des sources avec lesquelles le relais peut coopérer dans un mode de réception sélective.

Selon un mode de réalisation, les ensembles $\mathcal{L}_{R,b}$ sont tous identiques à un même ensemble $S_m$ de sources d'au plus toutes les sources, dans lequel les règles logiques sont toutes identiques à une 1ère règle, cette 1ère règle étant valide si d'une part l'ensemble $S_m$ moins les sources associées aux messages correctement décodés par la destination est inclus ou égal à l'ensemble des sources associées aux messages correctement décodés par le relais

$$(S_m \backslash \mathcal{S}_{D,b}) \subseteq \mathcal{S}_{R,b}$$

et si d'autre part l'ensemble des sources associées aux messages correctement décodés par le relais moins les sources associées aux messages correctement décodés par la destination n'est pas vide

$$\mathcal{S}_{R,b} \backslash \mathcal{S}_{D,b} \neq \emptyset.$$

En outre, après basculement, le relais code les messages des sources de l'ensemble $S$ moins les sources associées aux messages correctement décodés par la destination.

Selon un mode de réalisation, pour $b \leq$ *seuil temporel* les ensembles $\mathcal{L}_{R,b}$ sont tous identiques à un même ensemble $S_m$ de sources d'au plus toutes les sources $S_m \subseteq S$ et les règles logiques sont toutes identiques à une 1ère règle. Pour $b >$ *seuil temporel* les ensembles $\mathcal{L}_{R,b}$ sont vides et les règles logiques sont toutes identiques à une 2e règle. En outre, la 1ère règle est valide si l'ensemble $S_m$ moins les sources associées aux messages correctement décodés par la destination est inclus ou égal à l'ensemble des sources associées aux messages correctement décodés par le relais

$$(Sm \backslash \mathcal{S}_{D,b}) \subseteq \mathcal{S}_{R,b}$$

et si l'ensemble des sources associées aux messages correctement décodés par le relais moins les sources associées aux messages correctement décodés par la destination n'est pas vide

$$\mathcal{S}_{R,b} \backslash \mathcal{S}_{D,b} \neq \emptyset$$

et la 2e règle est valide si l'ensemble des sources associées aux messages correctement décodés par le relais moins les sources associées aux messages correctement décodés par la destination n'est pas vide

$$\mathcal{S}_{R,b} \backslash \mathcal{S}_{D,b} \neq \emptyset.$$

En outre, après basculement le relais code les messages correctement décodés par le relais moins les sources associées aux messages correctement décodés par la destination, *seuil temporel* étant un paramètre.

Selon un mode de réalisation, pour $b \leq$ *seuil temporel* les ensembles $\mathcal{L}_{R,b}$ sont tous identiques à un 1er ensemble $\{S_1, S_2\}$ de deux sources et les règles logiques sont toutes identiques à une 1ère règle. Pour $b >$ *seuil temporel* les ensembles $\mathcal{L}_{R,b}$ sont tous identiques à un 2e ensemble $S_m$ d'au plus toutes les sources et les règles logiques sont toutes identiques à une 2e règle. La 1ère règle est valide si l'intersection entre le 1er ensemble $\{S_1, S_2\}$ moins les sources associées aux messages correctement décodés par la destination et l'ensemble des sources associées aux messages correctement décodés par le relais n'est pas vide

$$(\{S_1, S_2\} \backslash \mathcal{S}_{D,b}) \cap \mathcal{S}_{R,b} \neq \emptyset.$$

La 2e règle est valide si l'intersection entre le 2e ensemble $S$ moins les sources associées aux messages correctement décodés par la destination et l'ensemble des sources associées aux messages correctement décodés par le relais n'est pas vide

$$S \backslash \mathcal{S}_{D,b} \cap \mathcal{S}_{R,b} \neq \emptyset.$$

En outre, après basculement le relais code les messages correctement décodés par le relais moins les sources associées aux messages correctement décodés par la destination.

Selon un mode de réalisation, l'accumulation des blocs de 1 à b émis successivement par une source est un mot de code d'un code dont le rendement diminue avec b, $1 \leq b \leq B$.

Selon un mode de réalisation, la voie de retour consiste en des signaux de contrôle nominatifs par source.

Selon un mode de réalisation, le procédé comprend en outre par source $S$ :

- codage en un mot de code $\mathbf{c}_S$ d'un message $\mathbf{u}_S$ de K bits comprenant un CRC, le codage étant de type à redondance incrémentale finie et délivrant un bloc $\mathbf{c}_S^{(b)}$ à chaque sous-intervalle $b$ de transmission, $1 \leq b \leq B$, tel que les $B$ blocs successifs $\mathbf{c}_S^{(1)}, \mathbf{c}_S^{(2)}, \dots \mathbf{c}_S^{(b)} \dots, \mathbf{c}_S^{(B)}$ forment le mot de code $\mathbf{c}_s$, tel que le premier bloc peut être décodé de manière indépendante des autres blocs et tel que les blocs suivants sont des bits de parité qui ajoutent une redondance au premier bloc,

- émission après modulation des blocs $\mathbf{c}_S^{(b)}$ pendant les $B$ sous-intervalles de transmission à destination du relais et de la destination.

Selon un mode de réalisation, après chaque émission d'un bloc, une source $S$ n'émet pas pendant une période de temps nécessaire pour réceptionner et décoder la voie de retour provenant de la destination indiquant un décodage correct ou pas d'un ou de plusieurs messages des sources. En outre, la source stoppe l'émission des blocs si son message $\mathbf{u}_S$ est indiqué correctement décodé.

Selon un mode de réalisation, les sources émettent simultanément à destination de la même destination ce qui permet d'utiliser au maximum la ressource spectrale commune. Le système est alors dit MARC (Multiple-Access Relay Channel) ou MAMRC (Multiple-Access Multiple Relays Channel).

Selon un mode de réalisation, le relais peut en outre exploiter les signaux de retour pour agir en amont lors de la détection et du décodage des messages reçus des sources et écarter ceux des sources déjà décodés sans erreur par la destination.

Les différents modes de réalisation précédents peuvent être combinés ou pas avec un ou plusieurs de ces modes pour définir un autre mode de réalisation.

L'invention a en outre pour objet un système qui comprend au moins deux sources, le relais et la destination, adapté pour la mise en œuvre d'un procédé selon l'invention. Ainsi, un système selon l'invention, comprend un relais selon l'invention.

Selon un exemple, le système est un système MARC. Lorsque le système comprend plusieurs relais il est dit MAMRC.

Chacune des sources, chacun des relais et la destination peuvent être équipés d'une ou de plusieurs antennes d'émission et d'une ou de plusieurs antennes de réception.

Selon une implémentation préférée, les étapes du procédé de relayage sont déterminées par les instructions d'un programme de relayage incorporé dans un ou plusieurs circuits électronique telles des puces elle-même pouvant être disposées dans des dispositifs électroniques du système. Le procédé de relayage selon l'invention peut tout aussi bien être mis en œuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en œuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront plus clairement à la lecture de la description suivante de modes de réalisation, donnés à titre de simple exemples illustratifs et non limitatifs, et des dessins annexés, parmi lesquels :

- la figure 1 est un schéma illustrant la topologie de base d'un système MARC à deux sources $S_1, S_2$, un relais $R$ et une destination $D$,
- la figure 2 est un schéma illustrant la topologie de base d'un système MAMRC à M sources $S_1, ..., S_M$, L relais $\{R_1, R_2, ..., R_L\}$ et une destination $D$,
- la figure 3 est un schéma d'un mode de réalisation des étapes du procédé de relayage mises en œuvre par une source $S$ selon l'invention,
- la figure 4 est un organigramme du procédé selon l'invention mis en œuvre par le relais $R$
- la figure 5 est un schéma d'un mode de réalisation d'un relais selon l'invention,
- la figure 6 est un schéma du multiplexage en temps entre les transmissions des sources et de la voie de retour,
- la figure 7 est un schéma d'un exemple de réalisation d'une source $S$ selon l'invention,
- la figure 8 est un schéma d'un exemple de réalisation d'un relais $R$ selon l'invention,
- la figure 9 est un schéma d'un exemple de réalisation d'un dispositif destination $D$ selon l'invention.

**Description de modes de réalisation particuliers**

Le contexte de l'invention est celui où plusieurs sources (émetteurs) $S_1,...,S_M$ veulent envoyer leurs messages respectifs à une destination commune D avec l'aide d'au moins un relais $\{R_1, R_2, ..., R_L\}$ half duplex comme illustré par la figure 2. Lorsqu'il y a plusieurs relais, chacun peut exploiter le signal émis par les autres relais actifs.

Il n'y a aucune contrainte sur le canal de transmission ; il peut être à évanouissement rapide (fast fading) ou lent (slow fading), il peut être sélectif en fréquence, et il peut être MIMO. Dans la suite de la description, les nœuds (sources, relais et destination) sont supposées parfaitement synchronisés et les sources sont indépendantes (il n'y a pas de corrélation entre elles).

Un cycle de transmission est décomposé en $T$ intervalles de transmission (time slots). La durée d'un cycle dépend du paramétrage du système et en particulier de la couche MAC selon le découpage en sept couches de l'OSI. A chaque intervalle de transmission, chaque source a un message de K bits à transmettre. Une information de type CRC fait partie du message de K bits transmis par une source et est utilisée pour déterminer si un message reçu est correctement décodé. Les $T$ messages d'une source peuvent être indépendants entre eux ou peuvent être corrélés et former une trame.

Selon l'exemple décrit, les sources émettent simultanément. Le relais tente de transmettre à la destination un signal utile représentatif des messages estimés et décodés sans erreur pour aider les communications entre les sources et la destination. Le relais coopère avec les sources en exploitant éventuellement dans le cas d'un système MAMRC les signaux transmis par les autres relais actifs avant le basculement de ce relais.

$\mathbb{F}_2$ est le corps de Galois à deux éléments, $\mathbf{R}$ est le corps des réels et $\mathbb{C}$ est le corps des complexes.

La figure 3 est un schéma d'un mode de réalisation des étapes du procédé de relayage selon l'invention mises en œuvre par la source.

A chaque intervalle de transmission chaque source $S$ parmi les M sources $\{S_1, S_2, ..., S_M\}$ a un message $\mathbf{u}_S$ comportant K bits d'information à transmettre,

$$\mathbf{u}_S \in \mathbb{F}_2^K.$$

$\mathbf{u}_S$ Le message $\mathbf{u}_S$ comprend un code de type CRC qui permet de vérifier l'intégrité du message $\mathbf{u}_S$.

Les sources $\{S_1, S_2, ..., S_M\}$ statistiquement indépendantes effectuent un codage du message $\mathbf{u}_S$ au moyen d'un code à redondance incrémentale et transforment le message $\mathbf{u}_S$ en $n_S$ bits notés

$$\mathbf{c}_S \in \mathbb{F}_2^{n_S}.$$

Le mot $\mathbf{c}_S$ de code obtenu est segmenté en $B$ blocs de redondance, chacun transmis pendant un sous intervalle, noté

$$\mathbf{c}_S^{(b)} \in \mathbb{F}_2^{n_{S,b}}$$

avec $b = 1,2,...,B$. Chaque bloc comprend $n_{S,b}$ bits, $n_S = \sum_{b=1}^{B} n_{S,b}$. Le code à redondance incrémentale peut être de type systématique, les bits d'information sont alors inclus dans le premier bloc : $\mathbf{u}_S \in \mathbf{c}_S^{(1)}$. $\mathbf{u}_S$ Que le code à redondance incrémentale soit ou pas de type systématique, il est tel que le premier bloc $c_S^{(1)}$ parmi les $B$ blocs peut être décodé de manière indépendante des autres blocs. Le rendement de codage le plus élevé à la source S est $K/n_{S,1}$ et il ne peut pas être plus grand qu'un, $n_{S,1} > K$. Le rendement de codage minimum pour une source S est $K/n_S$. Chaque bloc $\{c_S^{(b)} : 1 < b \leq B\}$ après le premier bloc comprend des bits de parité qui ajoutent une redondance au premier bloc, chacun des blocs $\{c_S^{(b)} : 1 < b \leq B\}$ peut être décodé conjointement avec le premier bloc.

Le code à redondance incrémentale peut être réalisé par exemple au moyen d'une famille finie de codes linéaires poinçonnés à rendements compatibles ou de codes sans rendement modifiés pour fonctionner avec des longueurs finies : code raptor (RC), turbo code poinçonné de rendement compatible (rate compatible punctured turbo code, RCPTC), code convolutionnel poinçonné de rendement compatible (rate compatible punctured convolutional code, RCPCC), LDPC de rendement compatible (rate compatible low density check code, RCLDPC).

Chaque bloc $\mathbf{c}_S^{(b)}$ est entrelacé par un entrelaceur distinct noté $\pi_S^{(b)}$, le mot de code après entrelacement est noté $\mathbf{b}_S = [\mathbf{b}_S^{(1)}, \mathbf{b}_S^{(2)}, ..., \mathbf{b}_S^{(B)}]$. Les entrelaceurs permettent de lutter contre les évanouissements qui peuvent intervenir lors de la transmission par le canal et permettent de donner à chaque source une empreinte qui facilite la séparation des sources par le relais et par la destination. Chaque partie entrelacée $\mathbf{b}_S^{(b)}$ du mot de code est modulée pour obtenir un mot de code complexe $\mathbf{x}_S = [\mathbf{x}_S^{(1)}, \mathbf{x}_S^{(2)}, ..., \mathbf{x}_S^{(B)}]$ avec $\mathbf{x}_S^{(b)} \in \mathcal{X}^{N_b}$, $b = 1,2,..., B$ où $\mathcal{X} \subset \mathbb{C}$ désigne un signal complexe de cardinalité $|X| = 2^{q_S}$ et où $N_b = n_{S,b}/q_S$.

Chaque source S parmi les M sources $\{S_1, S_2, ..., S_M\}$ peut utiliser un rendement minimum de codage $K/n_S$ et un ordre de modulation $q_s$ différents de ceux des autres sources dans la mesure où les nombres de sous intervalles de transmission des mots de code complexes émis sont identiques entre les sources : $n_{S,b}/q_S = N_b$, $b = 1,2, ... , B$.

Chaque source S émet le mot de code $\mathbf{x}_S = [\mathbf{x}_S^{(1)}, \mathbf{x}_S^{(2)}, ..., \mathbf{x}_S^{(B)}]$ composé de $B$ blocs pendant un intervalle de transmission qui se décompose en $B$ sous intervalles. Quel que soit b, $1 \leq b \leq B$, la concaténation (ou accumulation) des blocs 1 à b est elle-même un mot de code puisque issue du codeur à redondance incrémentale.

Pour simplifier la structure de réception des relais et de la destination, les sources décrites ont des entrelaceurs, un codeur et un modulateur qui ne varient pas en fonction de l'intervalle de transmission mais qui peuvent tout aussi bien être variables.

L'invention propose une nouvelle approche de la coopération d'un relais d'un système MARC ou MAMRC pour aider les sources qui transmettent et obtenir ainsi une amélioration de l'efficacité spectrale de la transmission tout en permettant un décodage simple et efficace dans le récepteur de la destination.

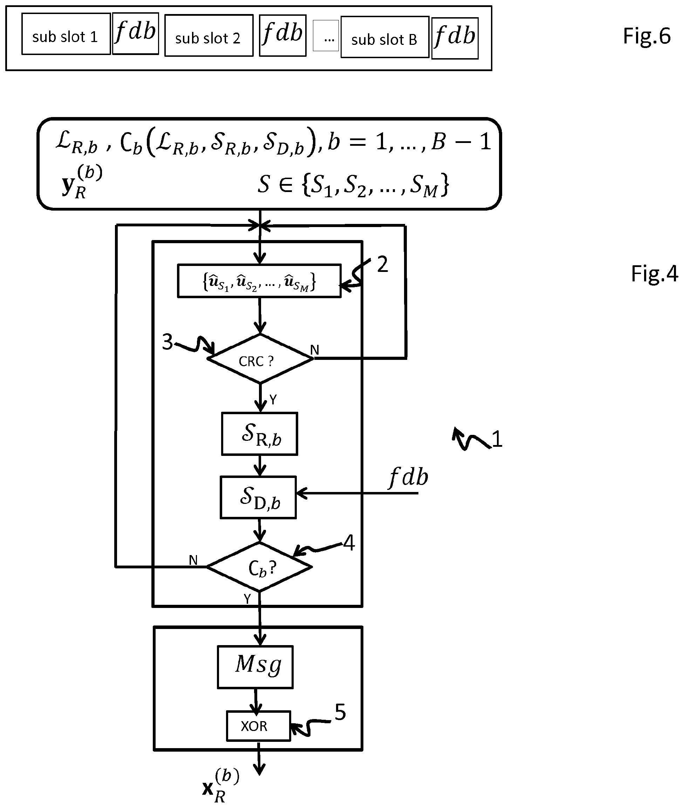

La figure 4 est un organigramme d'une mise en œuvre par le relais half-duplex $R$ du procédé de relayage selon l'invention, relais destiné à un système MARC illustré par la figure 1 ou un système MAMRC illustré par la figure 2. Le procédé 1 comprend une étape 2 de détection et de décodage, une étape 3 de détection d'erreurs et de décision, un test de validité des règles logiques 4 et une étape 5 de codage et de transmission vers la destination d'un signal représentatif des seuls messages décodés sans erreur.

Ce relais selon l'invention est illustré par la figure 5. Le relais comprend une mémoire MEMr, un détecteur et un décodeur DDU, un module de décision DU et un codeur et un émetteur ETU.

La mémoire MEMr mémorise un paramétrage d'ensembles $\mathcal{L}_{R,b}$ de sources indexés par le temps b et mémorise des règles logiques

$$C_b(\mathcal{L}_{R,b}, \mathcal{S}_{R,b}, \mathcal{S}_{D,b}), b = 1, ..., B - 1$$

indexées par le temps $b$. Ces règles logiques conduisent à la détermination d'une sélection de messages de sources décodées sans erreur avec lesquelles le relais coopère au temps $b + 1$ en prenant uniquement en compte l'ensemble $\mathcal{L}_{R,b}$ un ensemble $\mathcal{S}_{R,b}$ de sources décodées sans erreur par le relais et un ensemble $\mathcal{S}_{D,b}$ de sources décodées sans erreur par la destination. $B$ est un naturel, $B > 2$.

La structure et le fonctionnement du DDU sont similaires à ceux décrits dans les demandes de brevet WO 2015197990 et WO 2015197991.

Le détecteur et le décodeur DDU délivrent périodiquement une version estimée des messages décodés des sources au module DU. Dans le cas d'une émission simultanée sur une même ressource radio, la détection et le décodage 2 par le détecteur et le décodeur DDU sont effectués de manière conjointe et itérative. Cette étape de détection et de décodage fournit une estimation des messages à partir des mots reçus jusqu'au sous-intervalle courant, $b$, correspondant aux mots émis $[\mathbf{x}_S^{(1)}, \mathbf{x}_S^{(2)}, ..., \mathbf{x}_S^{(b)}]$ par chaque source S parmi les M sources $\{S_1, S_2, ... , S_M\}$. L'étape 2 de détection et de décodage génère une version estimée $\hat{u}_{S_1}, \hat{u}_{S_2}, ... , \hat{u}_{S_M}$ des messages décodés des sources.

Pendant chaque intervalle de transmission et pour chaque sous-intervalle $b \in \{1, ..., B\}$, le relais $R$ reçoit :

$$\mathbf{y}_R^{(b)} = \sum_{i=1}^M h_{S_i,R} \mathbf{x}_{S_i}^{(b)} + \sum_{R_i \in \{R_1,...,R_L\} \backslash R} h_{R_i,R} \boldsymbol{x}_{R_i}^{(b)} \mathbf{1}_{\left\{J_{R_i}^b \neq \phi\right\}} + \mathbf{n}_R^{(b)}$$

avec $h_{S_i,R} \in \mathbb{C}$ le gain de canal entre la source $S_i$ et le relais $R$, avec $h_{R_i,R} \in \mathbb{C}$ le gain de canal entre le relais $R_i$ et le relais $R$, $S_i \in \{S_1, ... , S_M\}$, $R \in \{R_1, ..., R_L\}$, $R_i \in \{R_1, ..., R_L\} \backslash R$. $\mathbf{n}_R^{(b)}$ est un vecteur de bruit additionnel de variance $\sigma^2$. $J_{R_i}^b$ est l'ensemble des sources avec lesquelles le relais $R_i$ coopère durant le sous intervalle $b$, et $\mathbf{1}_{\left\{J_{R_i}^b \neq \phi\right\}}$ est une fonction qui indique si le relais $R_i$ coopère ou pas (émet (actif) ou est silencieux) pendant le bloc $b$ :

$$\mathbf{1}_{\{J_{R_i}^b = \phi\}} = \begin{cases} 1 \ si \ J_{R_i}^b \neq \phi \\ 0 \qquad sinon \end{cases},$$

avec ø l'ensemble vide. Le décodage de la séquence des autres relais actifs est configuré à chaque sous-intervalle $b$ de transmission selon une information de signalisation provenant de ces autres relais indiquant si chacun de ces relais coopère sur ce bloc $b$, $b = 1, ...B$ (la non transmission d'un relais peut aussi être détectée « en aveugle » sans signalisation) et indiquant pour quelles sources chacun de ces relais coopère. Ainsi, le relais $R$ peut déterminer pour chaque bloc quelles sources sont représentées dans la séquence de chacun des autres relais actifs et aiguiller en conséquence les séquences décodées de manière à ce qu'elles soient prises en compte lors du décodage des messages des sources représentées dans la séquence. Une possibilité pour réduire la complexité de réception est d'allouer une bande de fréquence spécifique par relais (ou/et par sources).

Le DDU utilise le bloc b courant $\mathbf{y}_R^{(b)}$ et tous les blocs précédemment reçus $\mathbf{y}_R^{(1)}, \mathbf{y}_R^{(2)}, ..., \mathbf{y}_R^{(b-1)}$ pour obtenir une estimation des messages $\hat{u}_{\boldsymbol{S}_1}, \hat{u}_{\boldsymbol{S}_2}, ... , \hat{u}_{\boldsymbol{S}_M}$ des sources.

Le module de décision DU teste 3 le CRC des messages estimés fournis par le DDU pour déterminer les messages des sources décodés sans erreur. Le module DU détermine ainsi à chaque sous intervalle l'ensemble des messages correctement décodés par le relais $\mathcal{S}_{R,b}$. A chaque sous-intervalle courant d'un intervalle courant de transmission l'étape 3 détecte les erreurs sur les messages estimés $\hat{u}_{S_1}, \hat{u}_{S_2}, ..., \hat{u}_{S_M}$.

Selon un mode de réalisation, la détection d'erreurs est effectuée en exploitant une information de type CRC incluse dans le premier des B blocs provenant des sources. A l'issue de la détection d'erreur, il est décidé si un message estimé est décodé sans erreur ou pas. L'ensemble des messages correctement décodés par le relais au sous-intervalle courant $b$ est noté $\mathcal{S}_{R,b}$.

En l'absence de message décodé sans erreur, aucun message n'est sélectionné pour participer au codage réseau, le relais reste silencieux.

Le module de décision DU prend en outre comme données d'entrée, la voie de retour $f \ db$ provenant de la destination. Cette voie de retour indique parmi les $M$ messages des $M$ sources ceux qui ont été décodés sans erreur par la destination. A chaque sous-intervalle, la destination remonte l'indication des messages $\mathbf{u}_S$ provenant des sources $S = \{S_1, ... , S_M\}$ correctement décodés ou pas.

Le multiplexage en temps de la voie de retour avec la transmission des sources est illustré par le schéma de la figure 6. Après émission d'un bloc, chaque source interrompt son émission en attente du retour de la destination. Ce multiplexage assure que le relais dispose de la voie de retour faisant suite au bloc *b* reçu par la destination et par le relais pendant le sous-intervalle courant, *b*, avant d'éventuellement basculer pour coder et transmettre un signal pendant le sous-intervalle suivant, b + 1. Tant qu'il est en phase de réception, le relais écoute le retour de la destination. Après basculement, soit le relais n'écoute plus la voie de retour soit il s'interrompt régulièrement de transmettre pour écouter la voie de retour de la destination. Dans ce dernier cas, le relais peut arrêter de transmettre et d'écouter s'il constate que les sources avec lesquelles il coopère sont décodées sans erreur à la destination, ceci afin de minimiser l'interférence générée et l'énergie dépensée par le relais.

Ainsi, le module de décision DU sélectionne pour la transmission sur le sous-intervalle suivant, b + 1, parmi les messages correctement décodés par le DDU au sous-intervalle courant, b, uniquement ceux qui n'ont pas encore été décodés par la destination au sous-intervalle courant, b, c'est-à-dire que la voie de retour n'indique pas comme correctement décodés.

Lors de chaque sous-intervalle courant, b, b = 1, ... , B, de l'intervalle courant de transmission du cycle courant, la destination tente de détecter les messages de chaque source puis tente de décoder les messages qu'elle n'a pas encore correctement décodés.

La séquence reçue par la destination *D* pendant le sous-intervalle $b \in \{1, 2, ... , B\}$ de l'intervalle de transmission courant est la suivante :

$$\mathbf{y}_D^{(b)} = \sum_{i=1}^{M} h_{S_i,D} \mathbf{x}_{S_i}^{(b)} + \sum_{i=1}^{L} h_{R_i,D} \mathbf{x}_R^{(b)} \mathbf{1}_{\{J_{R_i}^b \neq \phi\}} + \mathbf{n}_D^{(b)}$$

dans laquelle $h_{S_i,D} \in \mathbb{C}$ représente le gain de canal entre la source $S_i$, $S_i \in \{S_1, ..., S_M\}$, et la destination *D*, $h_{R_i,D} \in \mathbb{C}$ représente le gain de canal entre le relais $R_i$ et la destination *D*, $R_i \in \{R_1, ... , R_L\}$, $\mathbf{n}_D^{(b)} \in \mathbb{C}^{N_b}$ est un vecteur de bruit et $J_{R_i}^b$ est l'ensemble des sources avec lesquelles le relais $R_i$ coopère durant le sous intervalle b avec $\mathbf{1}_{\{J_{R_i}^b = \phi\}}$ est un indicateur pour indiquer si le relais $R_i$ est silencieux ou pas :

$$\mathbf{1}_{\{J_{R_i}^b = \phi\}} = \begin{cases} 1 & si\, J_{R_i}^b \neq \phi \\ 0 & sinon \end{cases}$$

où $\phi$ représente l'ensemble vide.

Si la destination décode correctement le message de la source $S \in (S_1, ..., S_M)$ pendant le sous-intervalle *b*, elle remonte un signal *f db* pendant le temps réservé à la voie de retour indiquant que le message de la source *S* est correctement décodé, comme illustré par la figure 6. Après chaque émission d'un bloc $\mathbf{c}_S^{(b)}$, une source *S* ne transmet pas pendant une période de temps nécessaire pour réceptionner et décoder la voie de retour provenant de la destination indiquant un décodage correct ou pas du message de cette source.

Le module DU déduit à partir de la voie de retour l'ensemble des messages correctement décodés $\mathcal{S}_{D,b}$ par la destination à la fin du sous-intervalle *b*.

Le module DU teste la validité 4 au sous-intervalle *b* de la règle logique

$$C_b\big(\mathcal{L}_{R,b}, \mathcal{S}_{R,\mathrm{b}}, \mathcal{S}_{D,\mathrm{b}}\big), b = 1, ... , B - 1$$

mémorisée dans la mémoire MEMr pour déterminer la sélection des messages des sources décodées sans erreur avec lesquelles le relais coopère éventuellement au sous-intervalle *b* + 1 en prenant uniquement en compte l'ensemble $\mathcal{L}_{R,b}$, l'ensemble $\mathcal{S}_{R,b}$ de sources décodées sans erreur par le relais et l'ensemble $\mathcal{S}_{D,b}$ de sources décodées sans erreur par la destination. Si la règle logique $C_b$ est valide alors le module DU commande le basculement du moyen d'aiguillage IN.

Après basculement du moyen d'aiguillage IN, le codeur de l'ETU effectue un codage réseau 5 en ajoutant une redondance propre créant un code de réseau des messages sélectionnés *Msg* par le module DU pour générer un signal représentatif $x_{R,b}$ de ces messages. Ce codeur réseau est par exemple un OU exclusif des messages sélectionnés. Le signal représentatif est transmis par l'émetteur de l'ETU au sous-intervalle *b* + 1 suivant.

L'émetteur de l'ETU assure la transmission du signal représentatif à la destination pendant la phase de coopération du relais. La structure et le fonctionnement de l'ETU sont similaires à ceux décrits dans les demandes de brevet WO 2015197990 et WO 2015197991.

Lors de cette étape de codage et de transmission 5, le relais transmet lors du sous-intervalle suivant, $b + 1$, un signal représentatif $\mathbf{x}_R^{(b)}$ de ces seuls messages décodés sans erreur ainsi que qu'un signal indiquant les messages sélectionnés.

Selon un mode de réalisation, si la destination a indiqué via la voie de retour qu'elle avait décodé sans erreur tous les messages, le module DU commande au détecteur du DDU d'arrêter de traiter les signaux reçus i.e. l'étape de détection d'erreur et de décision interdit la détection et le décodage jusqu'à la fin de l'intervalle de transmission courant. Ainsi, l'étape 3 de détection d'erreur et de décision contrôle en outre l'étape 2 de détection et de décodage.

Dès que la source $S$ reçoit le signal $f\ db$ indiquant que la destination a correctement décodé le message $\mathbf{u}_S$, elle peut arrêter selon un mode de réalisation de transmettre son message $\mathbf{u}_S$. Dit autrement, la source stoppe la transmission des blocs suivants le bloc $\mathbf{c}_S^{(b)}$ à partir duquel la destination a correctement décodé le message $\mathbf{u}_S$.

En outre, si les messages $\{u_{S_1}, \dots, u_{S_M}\}$ des différentes sources ont tous été correctement décodés par la destination alors la source passe, selon un mode de réalisation, à l'intervalle de transmission suivant l'intervalle courant de transmission du cycle courant ou à un cycle suivant le cycle courant de transmission si l'intervalle courant est égale à $T$.

Même si les messages $[u_{S1}, \dots, u_{SM}\}$ des différentes sources n'ont pas tous été correctement décodés par la destination, la source passe, selon un mode de réalisation, à l'intervalle de transmission suivant l'intervalle courant de transmission du cycle courant de transmission si le sous-intervalle $b$ courant est égale à $B$.

Selon un mode de réalisation, les ensembles $\mathcal{L}_{R,b}$ sont tous identiques à un même ensemble $S_m$ de sources d'au plus toutes les sources : $S_m \subseteq S$. En outre, les règles logiques

$$C_b\big(\mathcal{L}_{R,b}, \mathcal{S}_{R,\mathrm{b}}, \mathcal{S}_{D,\mathrm{b}}\big), b = 1, \dots, B - 1$$

sont toutes identiques à une règle $C_1$. Cette règle $C_1$ est valide si

$$S_\mathrm{m} \backslash \mathcal{S}_{D,b}) \subseteq \mathcal{S}_{R,b}$$

et si

$$\mathcal{S}_{R,b} \backslash \mathcal{S}_{D,b} \neq \emptyset.$$

Après basculement le relais code les messages des sources de l'ensemble

$$S_m \backslash \mathcal{S}_{D,b}.$$

$S_m$ Ainsi ce mode permet de configurer le jeu de sources avec lesquelles le relais peut coopérer. Par exemple, une source est écartée de $S_m$ pour tenir compte par exemple des conditions de propagation désastreuses entre cette source et le relais.

*seuil temporel* est un paramètre, $1 < $ *seuil temporel* $ < B$.

Selon un mode de réalisation, les ensembles $\mathcal{L}_{R,b}$ sont tous identiques à un même ensemble $Sm$ de sources d'au plus toutes les sources : $S_m \subseteq S$ pour $b \leq$ *seuil temporel*. En outre, les règles logiques

$$C_b\big(\mathcal{L}_{R,b}, \mathcal{S}_{R,\mathrm{b}}, \mathcal{S}_{D,\mathrm{b}}\big)$$

$C_b$ sont toutes identiques à une 1ère règle $C_1$ pour $b \leq$ *seuil temporel*. En outre, pour $i >$ *seuil temporel* les ensembles

$\mathcal{L}_{R,b}$ sont vides et les règles logiques

$$C_b\left(\mathcal{L}_{R,b}, S_{R,\mathrm{b}}, S_{D,\mathrm{b}}\right)$$

$C_b$ sont toutes identiques à une 2e règle $C_2$. La 1ère règle $C_1$ est valide si l'ensemble $S_m$ moins les sources associées aux messages correctement décodés par la destination est inclus ou égal à l'ensemble des sources associées aux messages correctement décodés par le relais et si l'ensemble des sources associées aux messages correctement décodés par le relais moins les sources associées aux messages correctement décodés par la destination n'est pas vide:

$$(S_m \backslash S_{D,\mathrm{b}}) \subseteq S_{R,\mathrm{b}}$$

et

$$S_{R,\mathrm{b}} \backslash S_{D,\mathrm{b}} \neq \emptyset.$$

La 2e règle $C_2$ est valide si l'ensemble des sources associées aux messages correctement décodés par le relais moins les sources associées aux messages correctement décodés par la destination n'est pas vide :

$$S_{R,\mathrm{b}} \backslash S_{D,\mathrm{b}} \neq \emptyset.$$

Après basculement, le relais code les messages correctement décodés par le relais moins les messages correctement décodés par la destination :

$$S_{R,\mathrm{b}} \backslash S_{D,\mathrm{b}}.$$

Selon un mode de réalisation, pour $b \leq$ *seuil temporel* les ensembles $\mathcal{L}_{R,b}$ sont tous identiques à un 1er ensemble $\{S_1, S_2\}$ de deux sources et les règles logiques

$$C_b\left(\mathcal{L}_{R,b}, S_{R,\mathrm{b}}, S_{D,\mathrm{b}}\right)$$

sont toutes identiques à une 1ère règle $C_1$. Pour $b >$ *seuil temporel* les ensembles $\mathcal{L}_{R,b}$ sont tous identiques à un 2e ensemble $S_m$ d'au plus toutes les sources et les règles logiques

$$C_b\left(\mathcal{L}_{R,b}, S_{R,\mathrm{b}}, S_{D,\mathrm{b}}\right)$$

sont toutes identiques à une 2e règle $C_2$. La 1ère règle $C_1$ est valide si l'intersection entre le 1er ensemble $\{S_1, S_2\}$ moins les sources associées aux messages correctement décodés par la destination et l'ensemble des sources associées aux messages correctement décodés par le relais n'est pas vide:

$$(\{S_1, S_2\} \backslash$$

$$S_{D,b}) \cap S_{R,\mathrm{b}} \neq \emptyset.$$

La 2e règle C2 est valide si l'intersection entre le 2e ensemble $S_m$ moins les sources associées aux messages correctement décodés par la destination et l'ensemble des sources associées aux messages correctement décodés par le relais n'est pas vide :

$$S_m \backslash \mathcal{S}_{D,b} \cap \mathcal{S}_{R,b} \neq \emptyset.$$

Après basculement, le relais code les messages correctement décodés par le relais moins les messages correctement décodés par la destination :

$$\mathcal{S}_{R,\mathrm{b}} \backslash \mathcal{S}_{D,\mathrm{b}}.$$

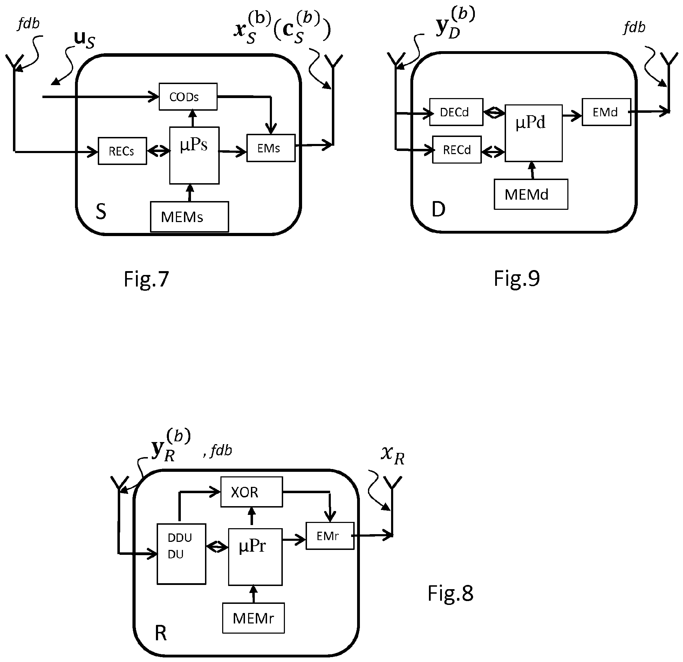

La figure 7 est un schéma d'un mode de réalisation d'une source $S$ selon l'invention pour la mise en œuvre d'un procédé de relayage selon l'invention. Le procédé de relayage est mis en œuvre par l'activation d'une application logicielle spécifique suite par exemple à l'activation d'un icône avec raccourci affiché sur l'écran de la source.

La source $S$ comprend un codeur CODs, un microprocesseur µPs, une mémoire MEMs, un récepteur RECs et un émetteur EMs. L'application logicielle spécifique est mémorisée dans la mémoire MEMs. L'exécution de cette application logicielle par le microprocesseur µPs met en œuvre :

- le codage de messages $\mathbf{u}_S$ de K bits comprenant un CRC par le codeur CODs en des mots de code $\mathbf{c}_s$, de type à redondance incrémentale finie pour délivrer à chaque sous intervalle de transmission $b = 1,2,... , B$ d'un intervalle courant de transmission d'un cycle courant de transmission, un bloc $\mathbf{c}_S^{(b)}$ tel que le premier bloc $\mathbf{c}_S^{(1)}$ parmi les $B$ blocs peut être décodé de manière indépendante des autres blocs et tel que chaque bloc $\{\mathbf{c}_S^{(b)}: 1 < b \leq B\}$ après le premier bloc comprend des bits de parité qui ajoutent une redondance au premier bloc, chacun des blocs $\{\mathbf{c}_S^{(b)}: 1 < b \leq B\}$ pouvant être décodé conjointement avec le premier bloc, avec K et $B$ des naturels, $B > 2$,

- l'émission par l'émetteur EMs des blocs d'un mot de code $\mathbf{c}_s$ après entrelacement du mot de code puis modulation pour obtenir un mot de code complexe $\mathbf{x}_S = [\mathbf{x}_S^{(1)}, \mathbf{x}_S^{(2)}, ..., \mathbf{x}_S^{(B)}]$ pendant l'intervalle courant de transmission à destination des relais et de la destination,

- la réception par le récepteur RECs d'une voie de retour $fdb$ provenant de la destination indiquant un décodage correct ou pas des messages des sources,

- l'arrêt de l'émission par l'émetteur des blocs $\mathbf{x}_S^{(b+1)}, ..., \mathbf{x}_S^{(B)}$ suivants le bloc $\mathbf{x}_S^{(b)}$ à partir duquel la voie de retour indique un décodage correcte du message $\mathbf{u}_S$ de la source $S$,

- l'interdiction de toute émission par l'émetteur pendant une période de temps nécessaire pour réceptionner et décoder la voie de retour $f\,db$ après chaque émission par l'émetteur d'un bloc $\mathbf{x}_S^{(b)}$ ($\mathbf{c}_S^{(b)}$).

La figure 8 est un schéma d'un mode de réalisation d'un relais $R$ selon l'invention apte à coopérer avec $M$ sources $S_1, ..., S_M$ et $L - 1$ relais $R_1, ..., R_{L-1}$ et une destination $D$ d'un système MAMRC pour la mise en œuvre d'un procédé de relayage selon l'invention. Le procédé de relayage est mis en œuvre par l'activation d'une application logicielle spécifique suite par exemple à l'activation d'un icône avec raccourci affiché sur l'écran du relais.

Le relais $R$ comprend un décodeur DDU, un module de décision DU, un microprocesseur µPr, un codeur réseau XOR, une mémoire MEM et un émetteur EMr. L'application logicielle spécifique est mémorisée dans la mémoire MEMr. L'exécution de cette application logicielle par le microprocesseur µPr met en œuvre :

- la détection et le décodage par le DDU à partir de blocs successifs reçus $\mathbf{y}_R^{(b)}$ provenant des sources pour estimer un message $\hat{\mathbf{u}}_S$ par source $S$,

- la détection d'erreurs sur les messages estimés et la décision des messages estimés sans erreur par le DU pour déterminer l'ensemble des messages correctement décodés par le relais au sous-intervalle courant $b$, noté $\mathcal{S}_{R,b}$,

- la détermination de l'ensemble des messages correctement décodés $\mathcal{S}_{D,b}$ par la destination à la fin du sous-intervalle $b$ par le module DU à partir de la voie de retour $f\,db$,

- le test de la validitée au sous-intervalle $b$ de la règle logique

$$C_b\big(\mathcal{L}_{R,b}, \mathcal{S}_{R,\mathrm{b}}, \mathcal{S}_{D,\mathrm{b}}\big), b = 1, \ldots, B - 1$$

mémorisée dans la mémoire MEMr par le module DU pour déterminer la sélection des messages des sources décodées sans erreur avec lesquelles le relais coopère éventuellement au sous-intervalle $b + 1$,
- l'activation par le module DU du codage réseau XOR d'une sélection Msg des messages décodés sans erreur pour générer un signal représentatif $x_R$, si la règle logique $C_b$ est valide,
- la transmission par l'émetteur EMr vers la destination du signal représentatif $x_R$ et d'un signal de contrôle indiquant les messages sélectionnés.

L'exécution des codes du programme fait que le module DU interdit l'émission par l'émetteur EMr après chaque réception par le relais d'un bloc $\boldsymbol{y}_R^{(b)}$ ($\mathbf{c}_S^{(\mathrm{b})}$) pendant une période de temps nécessaire pour réceptionner et décoder la voie de retour *fdb*.

La figure 9 est un schéma d'un dispositif destination $D$ selon l'invention apte à coopérer avec $M$ sources $S_1, \ldots, S_M$ et $L$ relais $R_1, \ldots, R_L$ d'un système MAMRC pour la mise en œuvre d'un procédé de relayage selon l'invention. Lors de cette coopération, le dispositif $D$ met en œuvre un procédé de réception de messages. Le procédé de réception de messages est mis en œuvre par l'activation d'une application logicielle spécifique suite par exemple à l'activation d'un icône avec raccourci affiché sur l'écran du dispositif.

Le dispositif $D$ comprend un récepteur RECd, un décodeur DECd, un microprocesseur $\mu$Pd une mémoire MEMd et un émetteur EMd. L'application logicielle spécifique est mémorisée dans la mémoire MEMd. L'exécution de cette application logicielle par le microprocesseur $\mu$Pd met en œuvre :

- le décodage par le décodeur DECd des messages émis par les sources $S_1, \ldots, S_M$ et des signaux émis par les relais pour obtenir des messages estimés et pour détecter des erreurs sur les messages estimés,
- la réception par le récepteur RECd de signaux de contrôle émis par les relais pour déterminer pour chaque relais actifs le jeu $S_R$ des messages pour lesquels ce relais coopère,
- l'émission par l'émetteur EMd d'un message de retour *f db* indiquant les messages estimés et décodés sans erreur par le dispositif $D$.

Les sources sont par exemples des utilisateurs qui cherchent à transmettre des messages à une destination commune qui est par exemple une station de base d'un réseau d'accès mobile. Les sources s'aident de plusieurs relais qui peuvent être des stations de base allégée et/ou par exemple une des sources dans le cas où cette dernière est sur le chemin entre les sources et la station de base. Une source peut jouer le rôle de relais par exemple sur une ressource radio qu'elle n'utilise pas pour transmettre ces propres messages. Les sources peuvent tout aussi bien être des stations de base qui s'adressent à la même destination.

Selon une utilisation particulière, les sources correspondent à des terminaux mobiles. Selon une autre utilisation, les sources peuvent correspondre à des services différents accessibles depuis un même terminal mais dans ce cas, le terminal est équipé d'au moins deux antennes qui déterminent deux canaux de propagation différents entre le terminal et les relais et entre le terminal et la destination.

## Revendications

1. Procédé (1) de relayage de mots de code émis simultanément par plusieurs sources pendant un intervalle de transmission d'un cycle de $T$ transmissions tel qu'un mot de code comprend $B$ blocs d'indice $b$ dont le premier peut être décodé de manière indépendante des autres blocs, un mot de code codant un message $\mathbf{u}_S$, avec $B$ et $T$ des naturels, $B > 2$, $T > 1$ et tel que les $B$ blocs sont transmis pendant $B$ sous-intervalles de transmission de l'intervalle de transmission, mis en œuvre par un relais half-duplex destiné à un système de télécommunication comprenant les sources ($S = \{S_1, S_M\}$), au moins le relais et une destination, comprenant :

   - un paramétrage d'ensembles $\mathcal{L}_{R,b}$ de sources indexés par l'indice $b$ de blocs,
   - une définition de règles logiques

$$C_b\big(\mathcal{L}_{R,b}, \mathcal{S}_{R,b}, \mathcal{S}_{D,b}\big), b = 1, \dots, B - 1$$

indexées par l'indice $b$ de blocs telle que la règle logiques $C_b$ conduit à la détermination d'une sélection de messages de sources décodées sans erreur avec lesquelles le relais coopère au sous intervalle de transmission suivant la transmission du bloc $b$ en prenant uniquement en compte l'ensemble $\mathcal{L}_{R,b}$, un ensemble $\mathcal{S}_{R,b}$ de sources décodées sans erreur par le relais et un ensemble $\mathcal{S}_{D,b}$ de sources décodées sans erreur par la destination,

- une phase (2) de réception comprenant :

 o la réception des mots de code émis par les sources, cette phase comprenant une étape de décodage pour estimer par source à partir des mots de code reçus le message $\mathbf{u}_S$ associé au mot de code ($c_S$) émis par la source,
 o la détection d'erreur et la décision (3) par le relais des messages décodés sans erreur, les messages décodés sans erreur déterminant l'ensemble $\mathcal{S}_{R,b}$ des sources décodées sans erreur par le relais,

- une phase (5) de codage et de transmission vers la destination d'un signal représentatif uniquement de la sélection des messages,

la phase de réception étant telle que, après chaque réception d'un bloc $\big(\mathbf{c}_S^{(b)}\big)$ des différentes sources, le relais réceptionne et décode une voie de retour provenant de la destination indiquant ($\mathcal{S}_{D,b}$) si aucun ou au moins un message est décodé sans erreur, ces messages décodés sans erreur par la destination déterminant l'ensemble

$$\mathcal{S}_{D,b}$$

de sources décodées sans erreur par la destination et le procédé étant tel que le relais bascule de la phase de réception à la phase de codage et de transmission dès (4) qu'une des règles logiques $C_b$ est valide.

2. Procédé (1) selon la revendication 1, tel que les règles logiques $C_b$, $b = 1, \dots, B$ - 1, définissent des sources avec lesquelles le relais peut coopérer dans un mode de réception non sélective ($C_1$) et des sources avec lesquelles le relais peut coopérer dans un mode de réception sélective ($C_2$).

3. Procédé (1) selon la revendication 1 dans lequel les ensembles $\mathcal{L}_{R,b}$ sont tous identiques à un même ensemble $S_m$ de sources d'au plus toutes les sources ($S_m \subseteq S$), dans lequel les règles logiques

$$(C_b\big(\mathcal{L}_{R,b}, \mathcal{S}_{R,b}, \mathcal{S}_{D,b}\big), b = 1, \dots, B - 1)$$

sont toutes identiques à une 1ère règle ($C_1$), cette 1ère règle ($C_1$) étant valide si d'une part l'ensemble $S_m$ moins les sources associées aux messages correctement décodés par la destination est inclus ou égal à l'ensemble des sources associées aux messages correctement décodés par le relais

$$((S_m \backslash \mathcal{S}_{D,b}) \subseteq \mathcal{S}_{R,b})$$

et si d'autre part l'ensemble des sources associées aux messages correctement décodés par le relais moins les sources associées aux messages correctement décodés par la destination n'est pas vide

$$(\mathcal{S}_{R,b} \backslash \mathcal{S}_{D,b} \neq \emptyset)$$

et dans lequel après basculement le relais code les messages des sources de l'ensemble S moins les sources associées aux messages correctement décodés par la destination.

4. Procédé (1) selon la revendication 1 dans lequel pour $b \leq$ *seuil temporel* les ensembles $\mathcal{L}_{R,b}$ sont tous identiques à un même ensemble $S_m$ de sources d'au plus toutes les sources $(S_m \subseteq S)$ ($S_m$ et les règles logiques

$$(C_b(\mathcal{L}_{R,b}, \mathcal{S}_{R,b}, \mathcal{S}_{D,b})$$

sont toutes identiques à une 1$^{ère}$ règle (C$_1$), dans lequel pour $b >$ *seuil temporel* les ensembles $\mathcal{L}_{R,b}$ sont vides et les règles logiques

$$(C_b(\mathcal{L}_{R,b}, \mathcal{S}_{R,b}, \mathcal{S}_{D,b})$$

sont toutes identiques à une 2$^e$ règle (C$_2$), la 1$^{ère}$ règle (C$_1$) étant valide si l'ensemble $S_m$ moins les sources associées aux messages correctement décodés par la destination est inclus ou égal à l'ensemble des sources associées aux messages correctement décodés par le relais

$$((Sm \backslash \mathcal{S}_{D,b}) \subseteq \mathcal{S}_{R,b})$$

et si l'ensemble des sources associées aux messages correctement décodés par le relais moins les sources associées aux messages correctement décodés par la destination n'est pas vide

$$(\mathcal{S}_{R,b} \backslash \mathcal{S}_{D,b} \neq \emptyset),$$

la 2$^e$ règle (C$_2$) étant valide si l'ensemble des sources associées aux messages correctement décodés par le relais moins les sources associées aux messages correctement décodés par la destination n'est pas vide

$$(\mathcal{S}_{R,b} \backslash \mathcal{S}_{D,b} \neq \emptyset),$$

et dans lequel après basculement le relais code les messages correctement décodés par le relais moins les sources associées aux messages correctement décodés par la destination, *seuil temporel* étant un paramètre.

5. Procédé (1) selon la revendication 1 dans lequel pour $b \leq$ *seuil temporel* les ensembles $\mathcal{L}_{R,b}$ sont tous identiques à un 1$^{er}$ ensemble $\{S_1, S_2\}$ de deux sources et les règles logiques

$$(C_b(\mathcal{L}_{R,b}, \mathcal{S}_{R,b}, \mathcal{S}_{D,b})$$

sont toutes identiques à une 1$^{ère}$ règle (C$_1$), dans lequel pour $b >$ *seuil temporel* les ensembles $\mathcal{L}_{R,b}$ sont tous identiques à un 2$^e$ ensemble $S_m$ d'au plus toutes les sources et les règles logiques

$$(C_b(\mathcal{L}_{R,b}, \mathcal{S}_{R,b}, \mathcal{S}_{D,b})$$

sont toutes identiques à une 2$^e$ règle (C$_2$), la 1$^{ère}$ règle (C$_1$) étant valide si l'intersection entre le 1$^{er}$ ensemble $\{S_1, S_2\}$ moins les sources associées aux messages correctement décodés par la destination et l'ensemble des sources associées aux messages correctement décodés par le relais n'est pas vide

$$((\{S_1, S_2\} \backslash \mathcal{S}_{D,b}) \cap \mathcal{S}_{R,b} \neq \emptyset),$$

la 2$^e$ règle (C$_2$) étant valide si l'intersection entre le 2$^e$ ensemble S moins les sources associées aux messages correctement décodés par la destination et l'ensemble des sources associées aux messages correctement décodés par le relais n'est pas vide

$$(S \backslash \mathcal{S}_{D,b} \cap \mathcal{S}_{R,b} \neq \emptyset),$$

et dans lequel après basculement le relais code les messages correctement décodés par le relais moins les sources associées aux messages correctement décodés par la destination, *seuil temporel* étant un paramètre.

6. Procédé (1) selon la revendication 1, dans lequel l'accumulation des blocs de 1 à b émis successivement par une source est un mot de code d'un code dont le rendement diminue avec b, $1 \leq b \leq B$.

7. Procédé (1) de relayage selon la revendication 1, dans lequel la voie de retour consiste en des signaux de contrôle nominatifs par source.

8. Procédé (1) de relayage selon l'une des revendications 1 à 7, comprenant par source S

   - codage en un mot de code $\mathbf{c}_S$ d'un message $\mathbf{u}_S$ de K bits comprenant un CRC, le codage étant de type à redondance incrémentale finie et délivrant un bloc $\mathbf{c}_S^{(b)}$ à chaque sous-intervalle b de transmission, $1 \leq b \leq B$, tel que les B blocs successifs $\mathbf{c}_S^{(1)}, \mathbf{c}_S^{(2)}, \ldots \mathbf{c}_S^{(b)} \ldots, \mathbf{c}_S^{(B)}$ forment le mot de code $\mathbf{c}_S$, tel que le premier bloc peut être décodé de manière indépendante des autres blocs et tel que les blocs suivants sont des bits de parité qui ajoutent une redondance au premier bloc,
   - émission après modulation des blocs $\mathbf{c}_S^{(b)}$ pendant les B sous-intervalles de transmission à destination du relais et de la destination.

9. Procédé (1) de relayage selon l'une des revendications 1 à 8 dans lequel après chaque émission d'un bloc $(\mathbf{c}_S^{(b)})$, une source S n'émet pas pendant une période de temps nécessaire pour réceptionner et décoder la voie de retour provenant de la destination indiquant un décodage correct ou pas d'un ou de plusieurs messages des sources et dans lequel la source stoppe l'émission des blocs si son message $\mathbf{u}_S$ est indiqué correctement décodé.

10. Relais (R) half duplex destiné à un système de télécommunication comprenant plusieurs sources ($S = \{S_1, \ldots, S_M\}$), au moins le relais et une destination, pour la mise en œuvre d'un procédé de relayage selon l'une quelconque des revendications 1 à 9, comprenant :

    - une mémoire (MEMr) pour mémoriser un paramétrage d'ensembles $\mathcal{L}_{R,b}$ de sources indexés par un indice b et pour mémoriser des règles logiques

$$C_b(\mathcal{L}_{R,b}, \mathcal{S}_{R,b}, \mathcal{S}_{D,b}), b = 1, \ldots, B-1$$

indexées par l'indice b telles que la règle logiques C$_b$ conduit à la détermination d'une sélection de messages de sources décodées sans erreur avec lesquelles le relais coopère au sous intervalle de transmission suivant la transmission du bloc b en prenant uniquement en compte l'ensemble $\mathcal{L}_{R,b}$, un ensemble $\mathcal{S}_{R,b}$ de sources décodées sans erreur par le relais et un ensemble $\mathcal{S}_{D,b}$ de sources décodées sans erreur par la destination, B un naturel, $B > 2$,
    - un moyen (DDU) de décodage pour estimer par source, à partir de mots reçus correspondant à des mots de code émis par les sources, les mots de code successifs émis par une source correspondant à B blocs dont le premier bloc peut être décodé de manière indépendante des autres blocs, un message associé aux mots de code émis par la source,
- un module de décision (DU) pour décider des messages source $\mathbf{u}_S$ décodés sans erreur à partir des messages estimés, à chaque estimation d'un message suite à un bloc reçu, et déterminer l'ensemble $\mathcal{S}_{R,b}$ des sources décodées sans erreur par le relais,
- un codeur réseau (ETU) de la sélection de messages,
- un émetteur (ETU) d'un signal représentatif des messages codés réseau vers la destination et d'un signal de contrôle indiquant les messages sélectionnés,

**caractérisé en ce que** :

- le moyen (DU) de décision aiguille la sélection des messages décodés sans erreur en entrée du codeur réseau (ETU) dès qu'une des règles logiques

$$C_b\bigl(\mathcal{L}_{R,b}, \mathcal{S}_{R,b}, \mathcal{S}_{D,b}\bigr), b = 1, ..., B-1$$

est valide, l'ensemble $\mathcal{S}_{D,b}$ des sources décodées sans erreur par la destination étant déterminé en prenant en compte une voie de retour (*fdb*) provenant de la destination indiquant un décodage correct ou pas d'un ou de plusieurs messages des sources, ces messages décodés sans erreur par la destination déterminant l'ensemble $\mathcal{S}_{D,b}$ de sources décodées sans erreur par la destination.

11. Système de télécommunication comprenant plusieurs sources ($S = \{S_1, ..., S_M\}$), au moins un relais selon la revendication 10 et une destination.

12. Programme d'ordinateur sur un support d'informations, ledit programme comportant des instructions de programme adaptées à la mise en œuvre d'un procédé de relayage d'un signal numérique selon l'une quelconque des revendications 1 à 9, lorsque ledit programme est chargé et exécuté dans un relais destiné à un système de télécommunication comprenant plusieurs sources ($S = \{S_1, ... , S_M\}$), au moins le relais et une destination.

13. Support d'informations comportant des instructions de programme adaptées à la mise en œuvre d'un procédé de relayage d'un signal numérique selon l'une quelconque des revendications 1 à 9, lorsque ledit programme est chargé et exécuté dans un relais destiné à un système de télécommunication comprenant plusieurs sources ($S = \{S_1, ..., S_M\}$), au moins le relais et une destination.


**Patentansprüche**

1. Verfahren (1) zur Weiterleitung von Codewörtern, die simultan von mehreren Quellen während eines Übertragungsintervalls eines Zyklus von $T$ Übertragungen gesendet werden, so dass ein Codewort $B$ Indexblöcke $b$ umfasst, von welchen der erste unabhängig von den anderen Blöcken decodiert werden kann, wobei ein Codewort eine Nachricht $u_s$ codiert, wobei $B$ und $T$ natürliche Zahlen sind, $B > 2$, $T > 1$, und so dass die $B$ Blöcke während $B$ Unter-Übertragungsintervallen des Übertragungsintervalls übertragen werden, das durch ein Halbduplexrelais für ein Telekommunikationssystem umfassend die Quellen ($S = \{S_1, ..., S_M\}$), wenigstens das Relais und einen Empfänger durchgeführt wird, umfassend:

- ein Parametrieren von Mengen $\mathcal{L}_{R,b}$ von Quellen, die durch den Blockindex $b$ indexiert sind,
- ein Definieren logischer Regeln

$$C_b\left(\mathcal{L}_{R,b}, \; \delta_{R,b}, \; \delta_{D,b}\right),$$

$b = 1, ..., B - 1$, die durch den Blockindex $b$ indexiert sind, so dass die logische Regel $C_b$ zur Bestimmung einer Auswahl von Nachrichten von Quellen führt, die fehlerfrei decodiert sind, mit welchen das Relais im Unter-Übertragungsintervall nach der Übertragung des Blocks $b$ zusammenwirkt, wobei einzig die Menge $\mathcal{L}_{R,b}$, eine Menge $\delta_{R,b}$ von Quellen, die fehlerfrei durch das Relais decodiert sind, und eine Menge $\delta_{D,b}$ von Quellen, die fehlerfrei durch den Empfänger decodiert sind, berücksichtigt werden,
- eine Empfangsphase (2) umfassend:

◦ das Empfangen der Codewörter, die von den Quellen gesendet werden, diese Phase umfassend einen Schritt des Decodierens, um pro Quelle ausgehend von den empfangenen Codewörtern die Nachricht $u_s$ zu schätzen, die dem Codewort ($c_s$) zugeordnet ist, das von der Quelle gesendet wird,
◦ das Erkennen von Fehlern und das Entscheiden (3), durch das Relais, über die Nachrichten, die fehlerfrei decodiert sind, wobei die fehlerfrei decodierten Nachrichten die Menge $\delta_{R,b}$ der Quellen bestimmen, die fehlerfrei durch das Relais decodiert sind,

- eine Phase (5) des Codierens und des Übertragens eines Signals, das einzig für die Auswahl der Nachrichten repräsentativ ist, an den Empfänger,

wobei die Empfangsphase so abläuft, dass nach jedem Empfang eines Blocks ($c_S^{(b)}$) von den verschiedenen Quellen das Relais eine Rückstrecke von dem Empfänger empfängt und decodiert, die angibt ($\delta_{D,b}$), ob keine oder mindestens eine Nachricht fehlerfrei decodiert ist, wobei diese Nachrichten, die durch den Empfänger fehlerfrei decodiert sind, die Menge $\delta_{D,b}$ von Quellen bestimmen, die durch den Empfängerfehlerfrei decodiert sind, und das Verfahren so abläuft, dass das Relais von der Empfangsphase zur Codierungs- und Übertragungsphase umschaltet, sobald (4) eine der logischen Regeln $C_b$ gültig ist.

2. Verfahren (1) nach Anspruch 1, wobei die logischen Regeln $C_b$, $b = 1, ..., B - 1$ Quellen, mit welchen das Relais in einem Modus nicht selektiven Empfangs ($C_1$) zusammenwirken kann, und Quellen, mit denen das Relais in einem Modus selektiven Empfangs ($C_2$) zusammenwirken kann, definieren.

3. Verfahren (1) nach Anspruch 1, wobei die Mengen $\mathcal{L}_{R,b}$ alle mit einer selben Menge $S_m$ von Quellen höchstens aller Quellen identisch sind, wobei die logischen Regeln

$$(C_b(\mathcal{L}_{R,b}, \quad \delta_{R,b}, \quad \delta_{D,b}),$$

$b = 1, ..., B - 1$) alle mit einer 1. Regel ($C_1$) identisch sind, wobei diese 1. Regel ($C_1$) gültig ist, wenn einerseits die Menge $S_m$ minus die Quellen, die den Nachrichten zugeordnet sind, die durch den Empfänger richtig decodiert sind, in der Menge der Quellen, die den Nachrichten zugeordnet sind, die durch das Relais richtig decodiert sind, enthalten oder gleich dieser ist ($(S_m \setminus \delta_{D,b}) \subseteq \delta_{R,b}$), und wenn andererseits die Menge der Quellen, die den Nachrichten zugeordnet sind, die durch das Relais richtig decodiert sind, minus die Quellen, die den Nachrichten zugeordnet sind, die durch den Empfänger richtig decodiert sind, nicht leer ist ($\delta_{R,b} \setminus \delta_{D,b} \neq \varnothing$), und wobei nach dem Umschalten das Relais die Nachrichten der Quellen der Menge $S$ minus die Quellen, die den Nachrichten zugeordnet sind, die durch den Empfänger richtig decodiert sind, codiert.

4. Verfahren (1) nach Anspruch 1, wobei für $b \leq$ temporäre Schwelle die Mengen $\mathcal{L}_{R,b}$ alle mit einer selben Menge $S_m$ von Quellen höchstens aller Quellen ($S_m \subseteq S$) identisch sind und die logischen Regeln $(C_b(\mathcal{L}_{R,b}, \quad \delta_{R,b}, \quad \delta_{D,b})$ alle mit einer 1. Regel ($C_1$) identisch sind, wobei für $b >$ temporäre Schwelle die Mengen $\mathcal{L}_{R,b}$ leer sind und die logischen Regeln $(C_b(\mathcal{L}_{R,b}, \quad \delta_{R,b}, \quad \delta_{D,b})$ alle mit einer 2. Regel ($C_2$) identisch sind, wobei die 1. Regel ($C_1$) gültig ist, wenn die Menge $S_m$ minus die Quellen, die den Nachrichten zugeordnet sind, die durch den Empfänger richtig decodiert sind, in der Menge der Quellen, die den Nachrichten zugeordnet sind, die durch das Relais richtig decodiert sind, enthalten oder gleich dieser ist ($(S \setminus \delta_{D,b}) \subseteq \delta_{R,b}$), und wenn die Menge der Quellen, die den Nachrichten zugeordnet sind, die durch das Relais richtig decodiert sind, minus die Quellen, die den Nachrichten zugeordnet sind, die durch den Empfänger richtig decodiert sind, nicht leer ist ($\delta_{R,b} \setminus \delta_{D,b} \neq \varnothing$), wobei die 2. Regel ($C_2$) gültig ist, wenn die Menge der Quellen, die den Nachrichten zugeordnet sind, die durch das Relais richtig decodiert sind, minus die Quellen, die den Nachrichten zugeordnet sind, die durch den Empfänger richtig decodiert sind, nicht leer ist ($\delta_{R,b} \setminus (\delta_{D,b} \neq \emptyset$) und wobei nach dem Umschalten das Relais die Nachrichten, die durch das Relais richtig decodiert sind, minus die Quellen, die den Nachrichten zugeordnet sind, die durch den Empfänger richtig decodiert sind, codiert, wobei *temporäre Schwelle* ein Parameter ist.

5. Verfahren (1) nach Anspruch 1, wobei für $b \leq$ *temporäre Schwelle* die Mengen $\mathcal{L}_{R,b}$ alle mit einer 1. Menge $\{S_1,S_2\}$ zweier Quellen identisch sind und die logischen Regeln ($C_b$($\mathcal{L}_{R,b}$, $\delta_{R,b}$, $\delta_{D,b}$) alle mit einer 1. Regel ($C_1$) identisch sind, wobei für $b >$ *temporäre Schwelle* die Mengen $\mathcal{L}_{R,b}$ alle mit einer 2. Menge $S_m$ höchstens aller Quellen identisch sind und die logischen Regeln ($C_b$($\mathcal{L}_{R,b}$, $\delta_{R,b}$, $\delta_{D,b}$) alle mit einer 2. Regel ($C_2$) identisch sind, wobei die 1. Regel ($C_1$) gültig ist, wenn die Schnittmenge zwischen der 1. Menge $\{S_1,S_2\}$ minus die Quellen, die den Nachrichten zugeordnet sind, die durch den Empfänger richtig decodiert sind, und der Menge der Quellen, die den Nachrichten zugeordnet sind, die durch das Relais richtig decodiert sind, nicht leer ist ($\{S_1,S_2\} \setminus \delta_{D,b} \cap \delta_{R,b} \neq \emptyset$), wobei die 2. Regel ($C_2$) gültig ist, wenn die Schnittmenge zwischen der 2. Menge $S$ minus die Quellen, die den Nachrichten zugeordnet sind, die durch den Empfänger richtig decodiert sind, und der Menge der Quellen, die den Nachrichten zugeordnet sind, die durch das Relais richtig decodiert sind, nicht leer ist ($S \setminus \delta_{D,b} \cap \delta_{R,b} \neq \emptyset$), und wobei nach dem Umschalten das Relais die Nachrichten, die durch das Relais richtig decodiert sind, minus die Quellen, die den Nachrichten zugeordnet sind, die durch den Empfänger richtig decodiert sind, codiert, wobei *temporäre Schwelle* ein Parameter ist.

6. Verfahren (1) nach Anspruch 1, wobei die Akkumulation der Blöcke von 1 bis b, die nacheinander von einer Quelle gesendet werden, ein Codewort eines Codes ist, dessen Leistung mit b, $1 \leq b \leq B$ abnimmt.

7. Weiterleitungsverfahren (1) nach Anspruch 1, wobei die Rückstrecke aus nominativen Kontrollsignalen pro Quelle besteht.

8. Weiterleitungsverfahren (1) nach einem der Ansprüche 1 bis 7, umfassend pro Quelle *S:*

   - Codieren, zu einem Codewort $c_s$, einer Nachricht $u_s$ aus K Bits umfassend eine CRC, wobei das Codieren vom Typ mit finiter inkrementeller Redundanz ist und einen Block $c_S^{(b)}$ bei jedem Unter-Übertragungsintervall b liefert, $1 \leq b \leq B$, so dass die *B* aufeinanderfolgenden Blöcke $c_S^{(1)}, c_S^{(2)}, \dots c_S^{(b)} \dots, c_S^{(B)}$ das Codewort $c_s$ bilden, so dass der erste Block unabhängig von den anderen Blöcken decodiert werden kann und so dass die folgenden Blöcke Paritätsbits sind, die dem ersten Block eine Redundanz hinzufügen,
   - Senden nach der Modulation der Blöcke $c_S^{(b)}$ während der *B* Unter-Übertragungsintervalle an das Relais und den Empfänger.

9. Weiterleitungsverfahren (1) nach einem der Ansprüche 1 bis 8, wobei nach jeder Sendung eines Blocks $\left(c_S^{(b)}\right)$ eine Quelle *S* während einer Zeitspanne nicht sendet, die notwendig ist, um die Rückstrecke von dem Empfänger zu empfangen und zu decodieren, die angibt, ob eine oder mehrere Nachrichten der Quellen richtig decodiert sind oder nicht, und wobei die Quelle das Senden der Blöcke stoppt, wenn ihre Nachricht $u_s$ als richtig decodiert angegeben ist.

10. Halbduplexrelais (R) für ein Telekommunikationssystem umfassend mehrere Quellen ($S = \{S_1, \dots, S_M\}$), wenigstens das Relais und einen Empfänger, für die Durchführung eines Weiterleitungsverfahrens nach einem der Ansprüche 1 bis 9, umfassend:

   - einen Speicher (MEMr) zur Speicherung einer Parametrierung von Mengen $\mathcal{L}_{R,b}$ von Quellen, die durch einen Index b indexiert sind, und zur Speicherung logischer Regeln $C_b$($\mathcal{L}_{R,b}$, $\delta_{R,b}$, $\delta_{D,b}$), $\delta_{D,b}$), b = 1,..., B - 1, die durch den Index b indexiert sind, so dass die logische Regel $C_b$ zur Bestimmung einer Auswahl von Nachrichten von Quellen führt, die fehlerfrei decodiert sind, mit welchen das Relais im Unter-Übertragungsintervall nach der Übertragung des Blocks b zusammenwirkt, wobei einzig die Menge $\mathcal{L}_{R,b}$, eine Menge $\delta_{R,b}$ von Quellen, die fehlerfrei durch das Relais decodiert sind, und eine Menge $\delta_{D,b}$ von Quellen, die fehlerfrei durch den Empfänger decodiert sind, berücksichtigt werden, wobei *B* eine natürliche Zahl ist, *B* > 2,

- ein Decodierungsmittel (DDU) zum Schätzen, pro Quelle, ausgehend von empfangenen Wörtern, die Codewörtern entsprechen, die von den Quellen gesendet werden, wobei die aufeinanderfolgenden Codewörter, die von einer Quelle gesendet werden, B Blöcken entsprechen, von denen der erste Block unabhängig von den anderen Blöcken decodiert werden kann, einer Nachricht, die den Codewörtern zugeordnet ist, die von der Quelle gesendet werden,

- ein Entscheidungsmodul (DU) zum Entscheiden über die Quellnachrichten $u_s$, die fehlerfrei ausgehend von den geschätzten Nachrichten decodiert sind, bei jeder Schätzung einer Nachricht nach einem empfangenen Block, und Bestimmen der Menge $S_{R,b}$ der Quellen, die fehlerfrei durch das Relais decodiert sind,

- einen Netzwerk-Codierer (ETU) der Auswahl von Nachrichten,

- einen Sender (ETU) eines Signals, das für die netzwerkcodierten Nachrichten repräsentativ ist, an den Empfänger, und eines Kontrollsignals, das die ausgewählten Nachrichten angibt,

**dadurch gekennzeichnet, dass**:

- das Entscheidungsmittel (DU) die Auswahl der Nachrichten, die fehlerfrei decodiert sind, zum Eingang des Netzwerk-Codierers (ETU) leitet, sobald eine der logischen Regeln $C_b\left(\mathcal{L}_{R,b}, \quad \delta_{R,b}, \quad \delta_{D,b}\right)$ , $b = 1, ..., B$ - 1 gültig ist, wobei die Menge $S_{D,b}$ der Quellen, die durch den Empfänger fehlerfrei decodiert sind, unter Berücksichtigung einer Rückstrecke (*fdb*) von dem Empfänger bestimmt wird, die angibt, ob eine oder mehrere Nachrichten der Quellen richtig decodiert sind oder nicht, wobei diese Nachrichten, die fehlerfrei durch den Empfänger decodiert sind, die Menge $\delta_{D,b}$ von Quellen bestimmen, die fehlerfrei durch den Empfänger decodiert sind.

11. Telekommunikationssystem umfassend mehrere Quellen ($S = \{S_1, ..., S_M\}$), mindestens ein Relais nach Anspruch 10 und einen Empfänger.

12. Computerprogramm auf einem Informationsträger, das Programm aufweisend Programmanweisungen, die zur Durchführung eines Verfahrens zur Weiterleitung eines digitalen Signals nach einem der Ansprüche 1 bis 9 geeignet sind, wenn das Programm in ein Relais für ein Telekommunikationssystem umfassend mehrere Quellen ($S = \{S_1,..., S_M\}$), wenigstens das Relais und einen Empfänger, geladen ist und darin ausgeführt wird.

13. Informationsträger aufweisend Programmanweisungen, die zur Durchführung eines Verfahrens zur Weiterleitung eines digitalen Signals nach einem der Ansprüche 1 bis 9 geeignet sind, wenn das Programm in ein Relais für ein Telekommunikationssystem umfassend mehrere Quellen ($S = \{S_1,..., S_M\}$), wenigstens das Relais und einen Empfänger, geladen ist und darin ausgeführt wird.

**Claims**

1. Method (1) for relaying code words transmitted simultaneously by a plurality of sources during a transmission interval of a cycle of *T* transmissions such that a code word comprises *B* blocks of index *b*, the first of which is able to be decoded independently of the other blocks, a code word coding a message **u**_s_, where *B* and *T* are natural numbers, *B* > 2, *T* > 1, and such that the *B* blocks are transmitted during *B* transmission sub-intervals of the transmission interval, implemented by a half-duplex relay intended for a telecommunications system comprising the sources ($S = \{S_1,..., S_M\}$), at least the relay and a destination, comprising:

- parameterizing sets $\mathcal{L}_{R,b}$ of sources indexed by the block index *b*,
- defining logic rules

$$C_b\left(\mathcal{L}_{R,b}, S_{R,b}, S_{D,b}\right), b = 1, ..., B - 1$$

indexed by the block index *b* such that the logic rule $C_b$ leads to the determination of a selection of messages from sources decoded without an error, with which the relay cooperates in the transmission interval following the transmission of the block *b*, taking into account only the set $\mathcal{L}_{R,b}$, a set $S_{R,b}$ of sources decoded without an error by the relay and a set $S_{D,b}$ of sources decoded without an error by the destination,
- a reception phase (2) comprising:

o receiving code words transmitted by the sources, this phase comprising a decoding step to estimate, per source, the message $\mathbf{u}_s$ associated with the code word ($c_s$) transmitted by the source on the basis of the received code words,
o error detection and decision (3) by the relay on the messages decoded without an error, the messages decoded without an error determining the set $S_{R,b}$ of sources decoded without an error by the relay,

- a phase (5) of coding and transmitting to the destination a signal representative only of the selection of the messages,

the reception phase being such that, after each reception of a block $\left(\mathbf{c}_s^{(b)}\right)$ from the various sources, the relay receives and decodes a return path coming from the destination indicating

$$(S_{D,b})$$

whether no or at least one message is decoded without an error, these messages decoded without an error by the destination determining the set

$$S_{D,b}$$

of sources decoded without an error by the destination, and the method being such that the relay switches from reception phase to the coding and transmission phase (4) as soon as one of the logic rules $C_b$ is valid.

2.  Method (1) according to Claim 1, such that the logic rules $C_b, b = 1, ..., B - 1$, define sources with which the relay is able to cooperate in a non-selective reception mode ($C_1$) and sources with which the relay is able to cooperate in a selective reception mode ($C_2$).

3.  Method (1) according to Claim 1, wherein the sets $\mathcal{L}_{R,b}$ are all identical to one and the same set $S_m$ of sources of at most all of the sources ($S_m \subseteq S$), wherein the logic rules

$$\left(C_b\left(\mathcal{L}_{R,b}, S_{R,b}, S_{D,b}\right), b = 1, ..., B - 1\right)$$

are all identical to a 1st rule ($C_1$), this 1st rule ($C_1$) being valid if firstly the set $S_m$ minus the sources associated with the messages correctly decoded by the destination is contained within or equal to the set of sources associated with the messages correctly decoded by the relay

$$\left((S_m \backslash S_{D,b}) \subseteq S_{R,b}\right)$$

and if secondly the set of sources associated with the messages correctly decoded by the relay minus the sources associated with the messages correctly decoded by the destination is not empty

$$\left(\bar{S}_{R,b} \backslash S_{D,b} \neq \emptyset\right),$$

and wherein, after switching, the relay codes the messages from the sources of the set $S$ minus the sources associated with the messages correctly decoded by the destination.

4. Method (1) according to Claim 1, wherein, for $b \leq$ *temporal threshold*, the sets $\mathcal{L}_{R,b}$ are all identical to one and the same set $S_m$ of sources of at most all of the sources ($S_m \subseteq S$) and the logic rules

$$(C_b(\mathcal{L}_{R,b}, S_{R,b}, S_{D,b})$$

are all identical to a 1st rule ($C_1$), wherein, for $b >$ *temporal threshold*, the sets $\mathcal{L}_{R,b}$ are empty and the logic rules

$$(C_b(\mathcal{L}_{R,b}, S_{R,b}, S_{D,b})$$

are all identical to a 2nd rule ($C_2$), the 1st rule ($C_1$) being valid if the set $S_m$ minus the sources associated with the messages correctly decoded by the destination is contained within or equal to the set of sources associated with the messages correctly decoded by the relay

$$((Sm \backslash S_{D,b}) \subseteq S_{R,b})$$

and if the set of sources associated with the messages correctly decoded by the relay minus the sources associated with the messages correctly decoded by the destination is not empty

$$(S_{R,b} \backslash S_{D,b} \neq \emptyset),$$

the 2nd rule ($C_2$) being valid if the set of sources associated with the messages correctly decoded by the relay minus the sources associated with the messages correctly decoded by the destination is not empty

$$(S_{R,b} \backslash S_{D,b} \neq \emptyset),$$

and wherein, after switching, the relay codes the messages correctly decoded by the relay minus the sources associated with the messages correctly decoded by the destination, *temporal threshold* being a parameter.

5. Method (1) according to Claim 1, wherein, for $b \leq$ *temporal threshold*, the sets $\mathcal{L}_{R,b}$ are all identical to a 1st set $\{S_1, S_2\}$ of two sources and the logic rules

$$(C_b(\mathcal{L}_{R,b}, S_{R,b}, S_{D,b})$$

are all identical to a 1st rule ($C_1$), wherein, for $b >$ *temporal threshold*, the sets $\mathcal{L}_{R,b}$ are all identical to a 2nd set $S_m$ of at most all of the sources and the logic rules

$$(C_b(\mathcal{L}_{R,b}, S_{R,b}, S_{D,b})$$

are all identical to a 2nd rule ($C_2$), the 1st rule ($C_1$) being valid if the intersection between the 1st set $\{S_1, S_2\}$ minus

the sources associated with the messages correctly decoded by the destination and the set of sources associated with the messages correctly decoded by the relay is not empty

$$(((\{S_1, S_2\} \backslash S_{D,b}) \cap S_{R,b} \neq \emptyset),$$

the 2nd rule ($C_2$) being valid if the intersection between the 2nd set $S$ minus the sources associated with the messages correctly decoded by the destination and the set of sources associated with the messages correctly decoded by the relay is not empty

$$(S \backslash \overline{S_{D,b}} \cap S_{R,b} \neq \emptyset),$$

and wherein, after switching, the relay codes the messages correctly decoded by the relay minus the sources associated with the messages correctly decoded by the destination, *temporal threshold* being a parameter.

6. Method (1) according to Claim 1, wherein the accumulation of blocks 1 to b transmitted successively by a source is a code word of a code whose rate decreases with b, $1 \leq b \leq B$.

7. Relaying method (1) according to Claim 1, wherein the return path consists of nominative control signals per source.

8. Relaying method (1) according to one of Claims 1 to 7, comprising, per source $S$:

   - coding a message $\mathbf{u}_S$ of K bits comprising a CRC into a code word $\mathbf{c}_s$, the coding being finite incremental redundancy coding type and delivering a block $\mathbf{c}_S^{(b)}$ at each transmission sub-interval b, $1 \leq b \leq B$, such that the B successive blocks $\mathbf{c}_S^{(1)}, \mathbf{c}_S^{(2)}, \dots \mathbf{c}_S^{(b)} \dots, \mathbf{c}_S^{(B)}$ form the code word $\mathbf{c}_s$, such that the first block is able to be decoded independently of the other blocks and such that the following blocks are parity bits that add redundancy to the first block,
   - transmitting, after modulation, the blocks $\mathbf{c}_S^{(b)}$ during the B transmission sub-intervals to the relay and to the destination.

9. Relaying method (1) according to one of Claims 1 to 8, wherein, after each transmission of a block $(\mathbf{c}_S^{(b)})$, a source $S$ does not transmit during a time period required to receive and decode the return path coming from the destination indicating correct or incorrect decoding of one or more messages from the sources, and wherein the source stops transmitting the blocks if its message $u_S$ is indicated as correctly decoded.

10. Half-duplex relay (R) intended for a telecommunications system comprising a plurality of sources ($S = \{S_1, \dots, S_M\}$), at least the relay and a destination, for implementing a relaying method according to any one of Claims 1 to 9, comprising:

    - a memory (MEMr) for storing a parameterization of sets $\mathcal{L}_{R,b}$ of sources indexed by an index b and for storing logic rules

$$C_b(\mathcal{L}_{R,b}, S_{R,b}, S_{D,b}), b = 1, \dots, B - 1$$

    indexed by the index b such that the logic rule $C_b$ leads to the determination of a selection of messages from sources decoded without an error, with which the relay cooperates in the transmission interval following the transmission of the block b, taking into account only the set $\mathcal{L}_{R,b}$, a set $S_{R,b}$ of sources decoded without an error by the relay and a set $\mathcal{S}_{D,b}$ of sources decoded without an error by the destination, *B* being a natural number, *B* > 2,

- a decoding means (DDU) to estimate, per source, a message associated with the code words transmitted by the source, on the basis of received words corresponding to code words transmitted by the sources, the successive code words transmitted by a source corresponding to B blocks, the first block of which is able to be decoded independently of the other blocks,

- a decision module (DU) for deciding the source messages $\mathbf{u}_S$ decoded without an error on the basis of the estimated messages, upon each estimation of a message following a received block, and determining the set

$\mathcal{S}_{R,b}$ of sources decoded without an error by the relay,

- a network coder (ETU) of the selected messages,

- a transmitter (ETU) of a signal representative of the network coded messages to the destination and of a control signal indicating the selected messages,

**characterized in that**:

- the decision means (DU) directs the selection of the messages decoded without an error at the input of the network coder (ETU) as soon as one of the logic rules

$$C_b\big(\mathcal{L}_{R,b}, \mathcal{S}_{R,b}, \mathcal{S}_{D,b}\big), b = 1, \dots, B-1$$

is valid, the set $\mathcal{S}_{D,b}$ of sources decoded without an error by the destination being determined by taking into account a return path (*fdb*) coming from the destination indicating correct or incorrect decoding of one or more messages from the sources, these messages decoded without an error by the destination determining the set $\mathcal{S}_{D,b}$ of sources decoded without an error by the destination.

11. Telecommunications system comprising a plurality of sources ($S = \{S_1,...,S_M\}$), at least one relay according to Claim 10 and a destination.

12. Computer program on an information medium, said program containing program instructions designed to implement a method for relaying a digital signal according to any one of Claims 1 to 9 when said program is loaded and executed in a relay intended for a telecommunications system comprising a plurality of sources ($S = \{S_1,...,S_M\}$), at least the relay and a destination.

13. Information medium containing program instructions designed to implement a method for relaying a digital signal according to any one of Claims 1 to 9 when said program is loaded and executed in a relay intended for a telecommunications system comprising a plurality of sources ($S = \{S_1,...,S_M\}$), at least the relay and a destination.

Fig.1

Fig.2

Fig.3

Fig.5

| sub slot 1 | $fdb$ | sub slot 2 | $fdb$ | ... | sub slot B | $fdb$ |

**Fig.6**

$$\mathcal{L}_{R,b}, C_b\big(\mathcal{L}_{R,b}, \mathcal{S}_{R,b}, \mathcal{S}_{D,b}\big), b = 1, \dots, B-1$$

$$\mathbf{y}_R^{(b)} \qquad\qquad S \in \{S_1, S_2, \dots, S_M\}$$

$$\{\hat{u}_{S_1}, \hat{u}_{S_2}, \dots, \hat{u}_{S_M}\} \quad 2$$

3

CRC ? — N

Y

$$\mathcal{S}_{R,b}$$

$$\mathcal{S}_{D,b} \longleftarrow fdb$$

4

N — $C_b$? 

Y

1

$$Msg$$

XOR 5

$$\mathbf{x}_R^{(b)}$$

**Fig.4**

Fig.7

Fig.9

Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012022905 A1
- WO 2015092302 A1
- WO 2015197990 A
- WO 2015197991 A

**Littérature non-brevet citée dans la description**

- A novel ARQ protocol for OFDMA relay system based on network coding. **JIANBO CAO.** 12ème conférence internationale sur les technologies de communication. IEEE ICCT, 11 Novembre 2011, 1047-1051